(19) Europäisches Patentamt
European Patent Office
Office européen des brevets

(11) **EP 4 485 573 A1**

(12) **EUROPEAN PATENT APPLICATION**
published in accordance with Art. 153(4) EPC

(43) Date of publication:
**01.01.2025 Bulletin 2025/01**

(21) Application number: **22924653.3**

(22) Date of filing: **23.09.2022**

(51) International Patent Classification (IPC):
*H01M 4/525* (2010.01)

(52) Cooperative Patent Classification (CPC):
**H01M 4/525;** Y02E 60/10

(86) International application number:
**PCT/CN2022/120889**

(87) International publication number:
**WO 2023/147726 (10.08.2023 Gazette 2023/32)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Beijing Easpring Material Technology
Co., Ltd.
Beijing 100160 (CN)**

(72) Inventors:
• **WANG, Jun
  Beijing 100160 (CN)**
• **LIU, Yafei
  Beijing 100160 (CN)**
• **CHEN, Yanbin
  Beijing 100160 (CN)**

(74) Representative: **Nederlandsch Octrooibureau
P.O. Box 29720
2502 LS The Hague (NL)**

(54) **PRECURSOR OF LITHIUM-CONTAINING OXIDE POSITIVE ELECTRODE MATERIAL, LITHIUM-CONTAINING OXIDE POSITIVE ELECTRODE MATERIAL, PREPARATION METHODS THEREFOR AND USE THEREOF, AND POSITIVE ELECTRODE PLATE AND USE THEREOF**

(57) The present invention relates to the technical field of lithium-ion batteries, and discloses a precursor of a lithium-containing oxide cathode material, a lithium-containing oxide cathode material, a preparation method and use thereof, and a positive electrode plate and use thereof. The cathode material has a compressive index $\Delta\lambda(P100)$ satisfying $\Delta\lambda(P100) \geq 60\% + (y/x) \times 5\%$, where y/x is a molar ratio of Mn/Ni in the cathode material. The lithium-containing oxide cathode material has high compressive strength and stability, only a small degree of fracture occurs under high pressure during a preparation process of the electrode plate, and it can be continuously subjected to lithium ion deintercalation/ deintercalation reactions without serious rupture.

FIG. 8

EP 4 485 573 A1

**Description**

**FIELD**

The present disclosure relates to the technical field of lithium-ion batteries, and more particularly, to a precursor of a lithium-containing oxide cathode material, a lithium-containing oxide cathode material, a preparation method and use thereof, and a positive electrode plate and use thereof.

**BACKGROUND**

In recent years, new energy vehicles, as a strategic emerging industry to cope with environmental pollution and energy crisis, exhibit a tendency of booming development. Lithium-ion batteries, as new energy carriers with excellent comprehensive performance, are widely used in markets such as electric vehicles, energy storage power stations, communications, digital electronic products, and the like.

In a lithium-ion battery, a positive electrode serves as a core material and directly determines technical performance level of the battery. Among the commonly used cathode materials for lithium-ion batteries, $LiNi_{1-x-y}Co_xMn_yO_2$(NCM) and $LiNi_{1-x-y}Co_xAl_yO_2$(NCA) with layered structure and lithium-rich manganese-based materials (LMR) have attracted much attention and are adequately studied due to their high specific capacity and energy density. However, in order to obtain higher volume energy density and comprehensive electrochemical performance, the cathode material has to be rolled with high pressure during a preparation process of an electrode plate to obtain a high electrode density. The cathode materials with low strength may be fractured or crushed in this process, which may increase contact area and side reactions with the electrolyte, thereby resulting in deterioration in cycle performance and rate performance. In addition, during the use of battery, repeated $Li^+$ deintercalation may cause expansion or contraction of a volume of the layered structure, which may lead to pulverization of the low-strength cathode material, thereby resulting in insufficient contact between particles, continuous formation of new electrolyte layers and increased side reactions, and thereby deterioration and even failure of battery performance.

Therefore, it is of great significance to develop a new preparation method, to adjust microstructure of the cathode materials with the layered structure, and to enhance the compressive strength or particle strength of the cathode materials, for achieving long cycle life, high specific capacity, and high rate performance of batteries.

**SUMMARY**

An object of the present disclosure is to overcome the defects in the prior art that lithium-containing metal oxide materials may rupture during a preparation process of an electrode plate, or secondary particles may rupture during a charge and discharge cycle, resulting in poor rate performance, deterioration of cycle performance, and reduced safety performance. Provided are a precursor of a lithium-containing oxide cathode material, a lithium-containing oxide cathode material, a preparation method and use thereof, and a positive electrode plate and use thereof. The lithium-containing oxide cathode material has high compressive strength and stability, only a small degree of fracture occurs under high pressure during a preparation process of the electrode plate, and it can be continuously subjected to lithium ion deintercalation/ deintercalation reactions without serious rupture.

In order to achieve the above-mentioned object, a first aspect of the present disclosure provides a lithium-containing oxide cathode material. The cathode material has a compressive index $\Delta\lambda(P_{100})$ satisfying $\Delta\lambda(P_{100})\geq60\%+(y/x)\times5\%$, where $y/x$ is a molar ratio of Mn/Ni in the cathode material.

A second aspect of the present disclosure provides a precursor of a lithium-containing oxide cathode material. The precursor has a compressive index $\Delta\lambda'(P_{50})$ satisfying $\Delta\lambda'(P_{50})\geq35\%+(v/u)\times8\%$, where v/u is a molar ratio of Mn/Ni in the precursor.

A third aspect of the present disclosure provides a preparation method of a lithium-containing oxide cathode material. The preparation method includes: S1, uniformly mixing a precursor having a chemical formula represented by Formula (1), a lithium source, and an optional additive containing element $M_2$, and performing a first sintering in an atmosphere furnace, to obtain a primary sintered material having a chemical formula represented by Formula (2); and S2: uniformly mixing the primary sintered material with an additive containing element M', and performing a second sintering on the mixed material in an atmosphere furnace, to obtain a lithium-containing metal oxide having a chemical formula represented by Formula (3),

$$Ni_uMn_vM_{1\gamma}(OH)_2, \qquad \text{Formula (1)},$$

where: u+v+y=1, $0.2<u<1$, $0<v\leq0.75$, $0\leq\gamma\leq0.35$, and $M_1$ is selected from at least one element of Al, Zr, Nb, Ti, Y, Sc, Cr, Co, W, Mg, Na, La, Os, Pr, Re, Ru, Sr, Sm, Ta, and B;

$$Li[Li_aNi_xMn_yM_j]O_2, \qquad \text{Formula (2)};$$

$$Li[Li_aNi_xMn_yM_j]O_2@M', \qquad \text{Formula (3)};$$

wherein in Formula (2) and Formula (3), $a+x+y+j=1$, $0{\leq}a{\leq}0.3$, $0.2<x<1$, $0<y{\leq}0.75$, $0<j{\leq}0.35$; and M includes element $M_1$ in the precursor and element $M_2$ introduced during the first sintering, $M_1$ and $M_2$ being the same or different and being each selected from at least one element of Al, Zr, Nb, Ti, Y, Sc, Cr, Co, W, Mg, La, Os, Pr, Re, Ru, Sr, Sm, Ta, and B; and wherein in Formula (3), M' is oxide, phosphide, sulfide, fluoride, or chloride containing at least one element of Al, Zr, Nb, Ti, Y, Sc, Cr, Co, W, Mg, La, Os, Pr, Re, Ru, Sr, Sm, Ta, and B, and a molar content of cations in M' is $w$, $w$ satisfying $0<w/(a+x+y+j){\leq}0.1$.

A fourth aspect of the present disclosure provides a lithium-containing oxide cathode material prepared by the above-mentioned preparation method of the lithium-containing oxide cathode material.

A fifth aspect of the present disclosure provides a positive electrode plate. The positive electrode plate includes at least 90 wt% of a lithium-containing oxide cathode material based on a total weight of the positive electrode plate. The lithium-containing oxide cathode material is the above-mentioned lithium-containing oxide cathode material.

A sixth aspect of the present disclosure provides use of the above-mentioned lithium-containing oxide cathode material, the above-mentioned precursor of the lithium-containing oxide cathode material, or the above-mentioned positive electrode plate in a lithium-ion battery.

Based on the above-mentioned technical solutions, the present disclosure has the following advantages.

(1) For the lithium-containing oxide cathode material and the precursor thereof according to the present disclosure, high crystallinity and compactness of the precursor can be achieved by controlling a specific microstructure, thereby improving the compressive index of the cathode material.

(2) The present disclosure can improve the compressive index, cycle life, and safety performance of the material by means of appropriate modifiers and doping elements.

(3) In the preparation process of the lithium-containing metal oxide according to the present disclosure, the sintering system affects the compressive index of the material. Therefore, when selecting the sintering system, cost and the compressive index, physical indicators, and electrochemical performance of the material can also be taken into consideration.

## BRIEF DESCRIPTION OF THE DRAWINGS

FIG. 1 is a schematic comparison graph of charge-discharge curves of Example 5 and Comparative Example 1;
FIG. 2 is a schematic comparison graph of cycle performance of Example 5 and Comparative Example 1;
FIG. 3 is a schematic comparison graph of charge-discharge curves of Example 5 and Comparative Example 2;
FIG. 4 is a schematic comparison graph of cycle performance of Example 5 and Comparative Example 2;
FIG. 5 is a schematic comparison graph of charge-discharge curves of Example 5 and Comparative Example 3;
FIG. 6 is a schematic comparison graph of cycle performance of Example 5 and Comparative Example 3;
FIG. 7 is a schematic comparison graph of charge-discharge curves of Example 5 and Comparative Example 4;
FIG. 8 is a schematic comparison graph of cycle performance of Example 5 and Comparative Example 4;
FIG. 9 is a schematic comparison graph of charge-discharge curves of Example 9 and Comparative Example 5;
FIG. 10 is a schematic comparison graph of cycle performance of Example 9 and Comparative Example 5;
FIG. 11 is a schematic comparison graph of charge-discharge curves of Example 9 and Comparative Example 6;
FIG. 12 is a schematic comparison graph of cycle performance of Example 9 and Comparative Example 6;
FIG. 13 is a schematic comparison graph of charge-discharge curves of Example 9 and Comparative Example 7; and
FIG. 14 is a schematic comparison graph of cycle performance of Example 9 and Comparative Example 7.

## DETAILED DESCRIPTION

In the present disclosure, endpoints and any value of the ranges shall not be limited to the exact range or value, and those ranges or values should be understood to include values close to those ranges or values. For numerical ranges, endpoints of respective ranges, an endpoint and individual point value of respective ranges, and individual point values can be combined with each other to obtain one or more new numerical ranges, which should be deemed to be specifically disclosed herein.

The conventional lithium-ion batteries using lithium-containing metal oxide material have to withstand high pressure during the preparation process of electrode plates. In addition, during continuous charge and discharge cycles, the material may rupture due to its insufficient compressive strength or unstable structure, thereby increasing side reactions with the electrolyte. Thus, the consumption of the electrolyte and the dissolution of transition metal cations in the cathode material are accelerated, resulting in reduced cycle performance, safety performance, and capacity, and even battery failure.

As mentioned above, a first aspect of the present disclosure provides a lithium-containing oxide cathode material. The cathode material has a compressive index $\Delta\lambda(P_{100})$ satisfying $\Delta\lambda(P_{100}) \geq 60\% + (y/x) \times 5\%$, where $y/x$ is a molar ratio of Mn/Ni in the cathode material.

In addition, in the present disclosure:

$$\Delta\lambda(P_n) = \left(1 - \frac{D_5^0 - D_5^{pn}}{D_5^0}\right) \times 100\%,$$

where: $D_5^0$ refers to a value of particle cumulative distribution $D_5$ of the material in a natural state without external mechanical pressure (i.e., P=0 Mpa); $D_5^{pn}$ refers to a value of particle cumulative distribution $D_5$ of the material under P=n Mpa; and $D_5$ refers to a particle size value when a cumulative volume distribution of the particles is 5%.

For example, the compressive index $\Delta\lambda(P_{100})$ is calculated based on the following equation:

$$\Delta\lambda(P_{100}) = (1 - \frac{D_5^0 - D_5^{P100}}{D_5^0}) \times 100\%$$

.

According to the present disclosure, preferably, the cathode material has a compressive index $\Delta\lambda(P_{200})$ satisfying $\Delta\lambda(P_{200}) \geq 45\% + (y/x) \times 5\%$.

According to the present disclosure, more preferably, the cathode material has a compressive index $\Delta\lambda(P_{300})$ satisfying $\Delta\lambda(P_{300}) \geq 35\% + (y/x) \times 5\%$.

According to the present disclosure, it should be noted that $\Delta\lambda(P_{100})$ represents the compressive index of the material when pressure P=100Mpa; $\Delta\lambda(P_{200})$ represents the compressive index of the material when pressure P=200Mpa; and so on.

The cathode material according to the present disclosure has excellent compressive strength and is not prone to rupture. When the cathode material according to the present disclosure is used as a positive electrode, it has a stable structure, few side reactions, and excellent safety performance and capacity retention rate.

According to the present disclosure, the lithium-containing oxide cathode material has a chemical formula represented by Formula (3):

$$Li[Li_aNi_xMn_yM_j]O_2@M', \qquad Formula\ (3),$$

where: $a+x+y+j=1$; $0 \leq a \leq 0.3$; $0.2 < x < 1$; $0 < y \leq 0.75$; $0 < j \leq 0.35$; M is selected from at least one element of Al, Zr, Nb, Ti, Y, Sc, Cr, Co, W, Mg, La, Os, Pr, Re, Ru, Sr, Sm, Ta, and B; M' is oxide, phosphide, sulfide, fluoride, or chloride containing at least one element of Al, Zr, Nb, Ti, Y, Sc, Cr, Co, W, Mg, La, Os, Pr, Re, Ru, Sr, Sm, Ta, and B; and a molar content of cations in M' is w, w satisfying $0 < w/(a+x+y+j) \leq 0.1$.

According to the present disclosure, preferably, $0.02 \leq a \leq 0.3$; $0.3 < x < 0.9$; $0.05 < y \leq 0.68$; $0 < j \leq 0.3$; and $0.001 < w/(a+x+y+j) \leq 0.02$.

According to the present disclosure, M is selected from at least one element of Zr, Nb, Ti, Y, Sc, Cr, Co, W, Mg, La, Ta, and B; and M' is oxide, phosphide, sulfide, or fluoride containing at least one element of Zr, Nb, Ti, Y, Sc, Cr, Co, W, Mg, La, Ta, and B.

In the present disclosure, the inventors found that: by adopting an appropriate modifier, the compressive strength and stability of material particles can be enhanced, a value of direct current internal resistance and gas production of the material during the cycle can be reduced, and the cycle life of the material can be prolonged.

By doping with elements such as Ti, Sc, Zr, W, Mg, Y, Co, Cr, Ta, and the like, crystal structure of the material can be stabilized, micro-area structure of the material can be improved, and the compressive index, cycle life, and safety performance of the material can be improved. By doping with elements such as Ti, Zr, Nb, La, W, Co, B, and the like, lithium-containing compounds (such as $LiNbO_3$, $Li_2ZrO_3$, $Li_4Ti_5O_{12}$, $Li_3BO_3$, or $LaNiO_3$, etc.) may be formed on the surface of the material particles or at the interface between the particles, thereby stabilizing the surface structure of the material particles or the interface strength between the particles or the grain boundary structure between the primary crystal grains, and the compressive index and cycle life of the material can be improved. Furthermore, transmission of lithium-ions between the particles and between the interfaces can be accelerated, and rate performance of the material can be improved. The cathode material according to the present disclosure also has other characteristics.

According to the present disclosure, the cathode material has a tap density of $\geq 1.7$ g/cm$^3$, preferably $\geq 2$ g/cm$^3$, and more preferably $\geq 2.4$ g/cm$^3$.

According to the present disclosure, the cathode material has a pellet density of $\geq 2.8$ g/cm$^3$, preferably $\geq 3$ g/cm$^3$, and more preferably $\geq 3.2$ g/cm$^3$.

According to the present disclosure, a content of surface soluble alkali of the cathode material satisfies the following conditions: $Li_2CO_3 \leq 1$ wt%, $LiOH \leq 0.5$ wt%; preferably, $Li_2CO_3 \leq 0.5$ wt%, $LiOH \leq 0.4$ wt%; further preferably, $Li_2CO_3 \leq 0.3$ wt%, $LiOH \leq 0.3$ wt%; and more preferably, $Li_2CO_3 \leq 0.2$ wt%, $LiOH \leq 0.2$ wt%.

According to the present disclosure, a full width at half maximum $FWHM_{(003)}$ of (003) crystal plane and a full width at half maximum $FWHM_{(104)}$ of (104) crystal plane of the cathode material obtained by X-Ray Diffraction (XRD) satisfy the following conditions: $0.10 \leq FWHM_{(003)} \leq 0.25$, and preferably, $0.13 \leq FWHM_{(003)} \leq 0.22$; and $0.20 \leq FWHM_{(104)} \leq 0.50$, and preferably, $0.22 \leq FWHM_{(104)} \leq 0.42$.

According to the present disclosure, a peak area $S_{(003)}$ of the (003) crystal plane and a peak area $S_{(104)}$ of the (104) crystal plane of the cathode material obtained by XRD satisfy the following conditions: $1.1 \leq S_{(003)}/S_{(104)} \leq 1.8$, and preferably, $1.2 \leq S_{(003)}/S_{(104)} \leq 1.6$.

In addition to using suitable additives, the present disclosure also achieves high crystallinity and compactness of the precursor by controlling the morphology and microstructure of the precursor, thereby increasing the compressive index of the cathode material.

A second aspect of the present disclosure provides a precursor of a lithium-containing oxide cathode material. The precursor has a compressive index $\Delta\lambda'(P_{50})$ satisfying $\Delta\lambda'(P_{50}) \geq 35\% + (v/u) \times 8\%$, where v/u is a molar ratio of Mn/Ni in the precursor.

According to the present disclosure, preferably, the precursor has a compressive index $\Delta\lambda'(P_{100})$ satisfying $\Delta\lambda'(P_{100}) \geq 25\% + (v/u) \times 8\%$.

According to the present disclosure, it should be noted that $\Delta\lambda'(P_{50})$ represents the compressive index of the precursor material when pressure P=50 MPa; $\Delta\lambda'(P_{100})$ represents the compressive index of the precursor material when pressure P=100 MPa; and so on.

In the present disclosure,

$$\Delta\lambda'(P_n) = \left(1 - \frac{D\prime_5^0 - D\prime_5^{Pn}}{D\prime_5^0}\right) \times 100\%,$$

where: $D\prime_5^0$ refers to a value of particle cumulative distribution $D_5$ of the material in a natural state without external mechanical pressure (i.e. P=0 Mpa); $D\prime_5^{Pn}$ refers to a value of particle cumulative distribution $D_5$ of the material under P=n Mpa.

For example, the compressive index $\Delta\lambda'(P_{50})$ of the precursor is calculated as follows:

$$\Delta\lambda'(P_{50}) = \left(1 - \frac{D\prime_5^0 - D\prime_5^{P50}}{D\prime_5^0}\right) \times 100\%.$$

According to the present disclosure, the precursor has a chemical formula represented by Formula (1):

$$Ni_u Mn_v M_\gamma (OH)_2, \qquad \text{Formula (1)},$$

where:

$u+v+\gamma=1$, $0.2<u<1$, $0<v\leq0.75$, $0\leq\gamma\leq0.35$, and M is selected from at least one element of Al, Zr, Nb, Ti, Y, Sc, Cr, Co, W, Mg, Na, La, Os, Pr, Re, Ru, Sr, Sm, Ta, and B; and
preferably, $0.3\leq u\leq0.9$, $0.05\leq v\leq0.68$, $0\leq\gamma\leq0.3$, and M is selected from at least one element of Ti, Al, Zr, W, Co, Nb, La, Na, and Mg.

In the present disclosure, by doping with elements such as Ti, Al, Zr, W, Co, Nb, La, Na, and Mg, micro-area interior or surface structure of the precursor can be stabilized.

The precursor material according to the present disclosure is also characterized in the following aspects.

According to the present disclosure, more preferably, the precursor has a tap density of $\geq 1.2$ g/cm$^3$, preferably

$\geq 1.6$ g/cm$^3$, and further preferably $\geq 2$ g/cm$^3$.

According to the present disclosure, the precursor has a specific surface area BET value satisfying BET$\leq 30$ m$^2$/g, and preferably, BET$\leq 25$ m$^2$/g.

According to the present disclosure, the precursor has a particle size distribution coefficient $K_{90}$ satisfying $0.5 \leq K_{90} \leq 1.6$, where $K_{90}=(D_{90}-D_{10})/D_{50}$, and $D_{10}$, $D_{50}$, and $D_{90}$ refer to the particle size values when the cumulative volume distribution of the particles is 10%, 50%, and 90%, respectively.

According to the present disclosure, a full width at half maximum FWHM$_{(001)}$ of (001) crystal plane, a full width at half maximum FWHM$_{(100)}$ of (100) crystal plane, and a full width at half maximum FWHM$_{(101)}$ of (101) crystal plane of the precursor obtained by XRD satisfy the following conditions:

$0.3 \leq$ FWHM$_{(001)} \leq 1$, and preferably, $0.5 \leq$ FWHM$_{(001)} \leq 0.8$, i.e., $2\theta$, measured by an X-ray diffractometer, of FWHM$_{(001)}$ of the precursor material according to the present disclosure is not less than 0.3 and not greater than 1, and preferably, not less than 0.5 and not greater than 0.8;
$0.10 \leq$ FWHM$_{(100)} \leq 0.5$, and preferably, $0.25 \leq$ FWHM$_{(100)} \leq 0.35$; and
$0.30 \leq$ FWIM$_{(101)} \leq 1.0$, and preferably, $0.4 \leq$ FWHM$_{(101)} \leq 0.8$.

According to the present disclosure, a peak area $S_{(101)}$ of the (001) crystal plane and a peak area $S_{(104)}$ of the (101) crystal plane of the precursor obtained by XRD satisfy the following condition: $S_{(001)}/S_{(101)} \geq 2.0$.

According to the present disclosure, an integral area $S_{(101)}$ of the (001) crystal plane and an integral area $S_{(104)}$ of the (101) crystal plane of the precursor obtained by XRD satisfy the following condition: $S_{(001)}/S_{(101)} \geq 2.0$.

The present disclosure further provides a preparation method of a precursor of a lithium-containing oxide cathode material. The preparation method includes: (1) mixing, by contacting, a solution or suspension of a nickel salt, a manganese salt, and a compound containing M, to obtain a mixed salt solution; and (2) feeding the parallel flows of the mixed salt solution, a precipitant solution, and a complexing agent solution I into a reactor for crystallization reaction, and performing solid-liquid separation, washing, heat treatment, and sieving treatment on the obtained slurry, to obtain the precursor of the lithium-containing oxide cathode material.

In the present disclosure, the inventors found that: for metal hydroxide precursors, during the mixing and sintering process, the precursor may rupture due to its insufficient compressive strength, resulting in reduced compressive strength, reduced tap density, and reduced electrochemical performance of the prepared cathode material. In the present disclosure, by controlling the synthesis process of the precursor, such as a concentration and type of the complexing agent, a concentration of the precipitant, stirring intensity, a reaction temperature, additives, a solid content, and a feed rate, a precursor with high crystallinity and compactness can be synthesized. By adjusting the particle size distribution and specific surface area of the precursor, the crystallinity, tap density, and compressive index of the precursor material can be improved. In addition, by adding suitable additives and adjusting the microstructure and morphology of the precursor, the compressive index of the precursor can be improved.

According to the present disclosure, the nickel salt, the manganese salt, or the additive containing M element are dissolved according to a molar ratio of $u:v:y$ to form a mixed salt solution with a concentration ranging from 1 mol/L to 3 mol/L. The compound containing M is added into water to prepare an M solution or suspension with a certain concentration. The alkali solution with a concentration ranging from 2 mol/L to 10 mol/L is obtained by dissolving alkali. The complexing agent solution with a concentration ranging from 2 mol/L to 13 mol/L is obtained by dissolving a complexing agent.

According to the present disclosure, the slurry has a solid content ranging from 200 g/L to 1000 g/L, and preferably, from 300 g/L to 800 g/L.

According to the present disclosure, the mixed salt solution of Ni and Mn, the alkali solution, the complexing agent solution, and the M solution are respectively added to a reactor having an overflow pipe through respective liquid inlet pipes in parallel flows, the stirring speed is kept constant, and inlet flow rates of the mixed salt solution, the precipitant solution, the complexing agent solution, and the M solution are controlled.

According to the present disclosure, the reaction conditions include: a reaction temperature ranging from 40°C to 70°C, reaction pH ranging from 10.6 to 12.5, and a reaction duration ranging from 5 hours to 100 hours.

According to the present disclosure, the nickel salt is one or more of nickel sulfate, nickel chloride, nickel nitrate, and nickel acetate.

According to the present disclosure, the manganese salt is one or more of manganese sulfate, manganese chloride, manganese nitrate, and manganese acetate.

According to the present disclosure, the compound containing M is one or more of sulfate, chloride, nitrate, acetate, citrate, carbonate, phosphate, oxalate, and fluoride containing the element M.

According to the present disclosure, the precipitant is an alkaline substance, and the alkali is one or more of sodium hydroxide, potassium hydroxide, and lithium hydroxide.

According to the present disclosure, the complexing agent is one or more of salicylic acid, ammonium sulfate, ammonium chloride, ammonium hydroxide, sulfosalicylic acid, and ethylenediaminetetraacetic acid.

According to the present disclosure, the sintering system (including sintering temperature, heating rate, sintering atmosphere, etc.) during the preparation of the lithium-containing metal oxide is also very important and will affect the compressive index of the material.

A third aspect of the present disclosure provides a preparation method of a lithium-containing oxide cathode material. The preparation method includes:

S1, uniformly mixing a precursor having a chemical formula represented by Formula (1), a lithium source, and an optional additive containing element $M_2$, and performing a first sintering on the mixed material in an atmosphere furnace, to obtain a primary sintered material having a chemical formula represented by Formula (2); and

S2, uniformly mixing the primary sintered material with an additive containing element M', and performing a second sintering on the mixed material in an atmosphere furnace, to obtain a lithium-containing metal oxide having a chemical formula represented by Formula (3),

$$Ni_uMn_vM_{1\gamma}(OH)_2, \qquad \text{Formula (1)},$$

where: $u+v+\gamma=1$, $0.2<u<1$, $0<v\leq0.75$, $0\leq\gamma\leq0.35$, and $M_1$ is selected from at least one element of Al, Zr, Nb, Ti, Y, Sc, Cr, Co, W, Mg, Na, La, Os, Pr, Re, Ru, Sr, Sm, Ta, and B;

$$Li[Li_aNi_xMn_yM_j]O_2, \qquad \text{Formula (2)};$$

$$Li[Li_aNi_xMn_yM_j]O_2@M', \qquad \text{Formula (3)};$$

wherein in Formula (2) and Formula (3), $0\leq a\leq0.3$, $0.2<x<1$, $0<y\leq0.75$, $0<j\leq0.35$; and M includes element $M_1$ in the precursor and element $M_2$ introduced during the first sintering, $M_1$ and $M_2$ being the same or different and being each selected from at least one element of Al, Zr, Nb, Ti, Y, Sc, Cr, Co, W, Mg, La, Os, Pr, Re, Ru, Sr, Sm, Ta, and B; and wherein in Formula (3), M' is oxide, phosphide, sulfide, fluoride, or chloride containing at least one element of Al, Zr, Nb, Ti, Y, Sc, Cr, Co, W, Mg, La, Os, Pr, Re, Ru, Sr, Sm, Ta, and B, and a molar content of cations in M' is $w$, $w$ satisfying $0<w/(a+x+y+j)\leq0.1$.

According to the present disclosure, the source of the element M in the cathode material includes the element $M_1$ in the precursor and the additive containing the element $M_2$ introduced during the first sintering process.

According to the present disclosure, the lithium source is at least one of lithium hydroxide, lithium carbonate, and lithium nitrate;

According to the present disclosure, the additive containing the element $M_2$ is selected from at least one of oxide, hydroxide, oxyhydroxide, phosphate, fluoride, boride, and carbonate containing the element $M_2$.

According to the present disclosure, the element $M_1$ and the element $M_2$ are the same as or different from the element M, and are each selected from at least one element of Al, Zr, Nb, Ti, Y, Sc, Cr, Co, W, Mg, La, Os, Pr, Re, Ru, Sr, Sm, Ta, and B.

According to the present disclosure, the additive containing the element M' is selected from at least one of oxide, hydroxide, oxyhydroxide, phosphate, fluoride, boride, nitride, carbonate, and oxalate containing the element M'.

According to the present disclosure, a molar ratio $Li/(Ni+Mn+M_1+M_2)$ of the lithium source to a sum of the precursor and the additive containing the element $M_2$ ranges from 1 to 1.85, and preferably from 1 to 1.5.

According to the present disclosure, the additive containing the element $M_2$ is added according to $M_2/(Ni+Mn+M_1+M_2)$ ranging from 0.0005 to 0.3, and preferably, from 0.001 to 0.2.

According to the present disclosure, a molar ratio $M'/(Ni+Mn+M_1+M_2)$ of the additive containing the element M' to the primary sintered material ranges from 0 to 0.1, and preferably, from 0.001 to 0.02.

According to the present disclosure, when a molar ratio of Ni/Mn is greater than 1, that is, $x/y>1$, a relationship between a sintering temperature $T_1$ of the first sintering and a content of Ni satisfies $550\times(2-x)°C<T_1\leq400\times(3-x)°C$, and a sintering duration of the first sintering ranges from 6 hours to 20 hours, and preferably, from 8 hours to 15 hours.

According to the present disclosure, when the molar ratio of Ni/Mn is smaller than or equal to 1, that is, $y/x\geq1$, a relationship between a sintering temperature $T_2$ of the first sintering and a content of Mn satisfies $500\times(1+y)\leq T_2<650\times(1+y)°C$, and a sintering duration of the first sintering ranges from 6 hours to 20 hours, and preferably, from 8 hours to 15 hours.

According to the present disclosure, when $x<0.5$, the first sintering and the second sintering are performed in an air atmosphere; when $0.5\leq x<0.6$, the first sintering and the second sintering are performed in an air atmosphere or a mixture atmosphere of air and oxygen; and when $x\geq0.6$, the first sintering and the second sintering are performed in an oxygen atmosphere or a mixture atmosphere of oxygen and air.

A fourth aspect of the present disclosure provides a lithium-containing oxide cathode material prepared by the above-mentioned preparation method of the lithium-containing oxide cathode material.

A fifth aspect of the present disclosure provides a positive electrode plate. The positive electrode plate includes at least 90 wt% of a lithium-containing oxide cathode material based on a total weight of the positive electrode plate. The lithium-containing oxide cathode material is the above-mentioned lithium-containing oxide cathode material.

According to the present disclosure, preferably, a mass percentage of the cathode material is not less than 95%.

According to the present disclosure, the positive electrode plate has an electrode density of $\geq 2.8$ g/cm$^3$, preferably $\geq 3.2$ g/cm$^3$, and more preferably $\geq 3.5$ g/cm$^3$.

A sixth aspect of the present disclosure provides use of the above-mentioned lithium-containing oxide cathode material, the above-mentioned precursor of the lithium-containing oxide cathode material, or the above-mentioned positive electrode plate in a lithium-ion battery.

The present disclosure will be described in detail below by way of examples.

In the following examples and comparative examples, all raw materials are commercially available, unless otherwise specified.

In the following examples, the involved performances were obtained by the following ways.

(1) Phase test: test by means of a SmartLab 9kW X-ray diffractometer from Rigaku Corporation, Japan.

(2) Morphology test: test by means of S-4800 scanning electron microscope from Hitachi, Ltd, Japan.

(3) Particle size test: test by means of Hydro 2000mu laser particle size analyzer from Marvern, Inc.

(4) Specific surface area: obtained by means of Tristar II 3020 specific surface area tester from Micromertics, USA.

(5) Tap density: obtained by means of BT-30 tap density tester from Baxter Company.

(6) Pellet density: obtained by means of MCP-PD51 powder impedance tester from Mitsubishi Chemical Corporation, Japan.

(7) Compressive index test: the material was compressed under a specific pressure by means of 4350 manual tablet press from Carver Company, USA, and the particle size of the fractured material was measured and calculated based on the equation of compressive index.

(8) Surface residual alkali test: measured by titration using Metrohmm888 professional Tirando intelligent potentiometric titrator.

(9) Thermal stability test: by using TGA-DSC3 thermogravimetric analyzer from Mettler Toledo.

(10) Electrochemical performance test:

The electrochemical performance of the prepared lithium-containing oxide cathode material was obtained by testing 2025-type button batteries using Xinwei Battery Test System. Specifically:

1) The preparation process of a 2025-type button battery

Preparation of electrode plate: a lithium-containing oxide cathode material, carbon black, and polyvinylidene fluoride according to a certain mass ratio were fully mixed with an appropriate amount of N-methylpyrrolidone to prepare a uniform slurry, and the slurry was coated on an aluminum foil, dried at 120°C, rolled, and punched to form a positive electrode plate with a diameter of 11 mm.

Assembly of battery: a Li metal plate with a diameter of 17 mm and a thickness of 1 mm was used as a negative electrode; a polyethylene porous membrane with a thickness of 25 $\mu$m was used as a separator; and a mixture of equal amounts of 1 mol/L LiPF$_6$, ethylene carbonate (EC), and diethyl carbonate (DEC) was used as an electrolyte.

The positive electrode plate, the separator, the negative electrode plate, and the electrolyte were assembled into a 2025-type button battery in an Ar glove box with a water content and an oxygen content of less than 5 ppm, and the battery at this moment was regarded as an unactivated battery.

2) Electrochemical performance test

When a molar ratio of Ni/Mn was greater than 1, i.e., $x/y>1$, the test conditions of the button battery were as follows. The button battery, after being prepared, was placed for 2 hours. After the open circuit voltage was stabilized, the battery was charged to a cut-off voltage of 4.3V with a current density of 0.1C at the positive electrode, next charged at a constant voltage for 30 minutes, and then discharged to a cut-off voltage of 3.0V at a same current density. The same method was repeated once, and the battery at this moment was regarded as an activated battery. Under a voltage ranging from 3.0V to 4.3V and within a charge and discharge range from 3.0V to 4.3V, the activated battery was subjected to charge and discharge tests at 25°C and at 0.1C to evaluate the charge and discharge capacity of the material. The activated battery was subjected to charge and discharge tests at 0.1C, 0.2C, 0.33C, 0.5C, and 1C, and a ratio of 1C capacity to 0.1C capacity was used to evaluate the rate performance of the material. In the range from 3.0V to 4.4V, the cycle performance of the material after 80 cycles at 1C was evaluated.

When the molar ratio of Ni/Mn is not greater than 1, that is, $x/y \leq 1$, the test conditions of the button battery were as follows. The button battery, after being prepared, was placed for 2 hours. After the open circuit voltage was stabilized, the battery was charged to a cut-off voltage of 4.6V with a current density of 0.1C at the positive electrode, next charged at a constant voltage for 30 minutes, and then discharged to a cut-off voltage of 2.0V at a same current density. The same method was repeated once, and the battery at this moment was regarded as an activated battery. Under a voltage ranging from 2.0V to 4.6V and within a charge and discharge range from 2.0V to 4.6V, the activated battery was subjected to charge and discharge tests at 25°C and at 0.1C to evaluate the charge and discharge capacity of the material. The activated battery was subjected to charge and discharge tests at 0.1C, 0.2C, 0.33C, 0.5C, and 1C, and a ratio of 1C capacity to 0.1C capacity was used to evaluate the rate performance of the material. In the range from 2.0V to 4.6V, the cycle performance of the material after 80 cycles at 0.5C was evaluated.

**Example 1**

Example 1 was intended to illustrate a lithium-containing oxide cathode material prepared according to the present disclosure.

Nickel sulfate and manganese sulfate were dissolved according to a metal molar ratio of 5:3 to obtain a 2 mol/L mixed salt solution. Cobalt sulfate and aluminum sulfate were dissolved according to metal molar ratios of Co/(Ni+Mn+Co+Al)=0.18 and Al/(Ni+Mn+Co+Al)=0.02 to obtain a 2 mol/L mixed salt solution. Sodium hydroxide was dissolved to form an alkaline solution with a concentration of 6 mol/L, and ammonium hydroxide was dissolved to form a complexing agent solution with a concentration of 5 mol/L.

Then, 20L of mixed salt solution, alkaline solution, and complexing agent solution were added into a reactor in parallel for reaction. The stirring speed was kept constant at 600 rpm during the process. In the meantime, an inlet flow rate of the mixed salt solution was controlled to 300 mL/h, reaction pH was controlled to 11.6, reaction temperature was kept at 50°C, and a concentration of ammonia in the reaction system was controlled to be 9 g/L. The reaction was carried out in $N_2$ gas, and the reaction was stayed for 60 hours. The solid content was 500 g/L. The slurry obtained through crystallization reaction of the precipitate was subjected to solid-liquid separation and washing, and then dried at 105°C for 10 hours. A spherical $Ni_{0.5}Mn_{0.3}Co_{0.18}Al_{0.02}(OH)_2$ precursor material was obtained after sieving, which was recorded as P-1.

The precursor P-1, lithium carbonate, and additives $TiO_2$ and $WO_3$ were mixed evenly in a high-speed mixer according to Li:(Ni+Mn+Co+Al+Ti+W)=1.03, Ti:(Ni+Mn+Co+Al+Ti+W)=0.003, W:(Ni+Mn+Co+Al+Ti+W)=0.002. In an air atmosphere, the temperature was raised to 920°C, maintained for 10 hours, and naturally cooled, to obtain a primary sintered cathode material $Li[Li_0Ni_{0.4975}Mn_{0.2985}Co_{0.1791}Al_{0.0199}Ti_{0.003}W_{0.002}]O_2$, which was recorded as S-1.

The primary sintered material S-1, and additives $Nb_2O_5$ and $La_2O_3$ were mixed evenly according to Nb:(Ni+Mn+Co+Al+Ti+W)=0.002 and La:(Ni+Mn+Co+Al+Ti+W)=0.002. In an air atmosphere, the temperature was raised to 650°C, maintained for 6 hours, and naturally cooled, to obtain a secondary sintered cathode material $Li[Li_0Ni_{0.4975}Mn_{0.2985}Co_{0.1791}Al_{0.0199}Ti_{0.003}W_{0.002}]@Nb_{0.002}La_{0.002}$, which was recorded as FS-1.

**Example 2 to Example 14**

Example 2 to Example 14 were intended to illustrate the lithium-containing oxide cathode material prepared according to the present disclosure.

The lithium-containing oxide cathode material was prepared according to the same method as that of Example 1. Example 2 to Example 14 merely differed from Example 1 in the preparation processes of the precursor, primary sintered cathode material, and secondary sintered cathode material, as shown in Table 1.

[Table 1]

|  | Example 1 | Example 2 | Example 3 | Example 4 | Example 5 |
|---|---|---|---|---|---|
| Preparation process of precursor | | | | | |
| Nickel salt or manganese salt | Nickel sulfate, manganese sulfate | Nickel sulfate, manganese sulfate | Nickel sulfate, manganese sulfate | Nickel sulfate, manganese sulfate | Nickel sulfate, manganese sulfate |
| Ni/Mn ratio | 5:3 | 6:2 | 7.5:2.4 | 8:1 | 9:0.5 |
| Additive M | Cobalt sulfate, aluminum sulfate | Cobalt sulfate | Ammonium niobium oxalate | Cobalt sulfate, ammonium tungstate | Cobalt sulfate, aluminum sulfate |

(continued)

| | Example 1 | Example 2 | Example 3 | Example 4 | Example 5 |
|---|---|---|---|---|---|
| **Preparation process of precursor** | | | | | |
| Nickel salt or manganese salt | Nickel sulfate, manganese sulfate | Nickel sulfate, manganese sulfate | Nickel sulfate, manganese sulfate | Nickel sulfate, manganese sulfate | Nickel sulfate, manganese sulfate |
| Content of additive M | Co/(Ni+Mn+Co+Al)=0.18; Al/(Ni+Mn+Co+Al)=0.02 | Co/(Ni+Mn+Co)=0.2 | Nb/(Ni+Mn+Nb)=0.1 | Co/(Ni+Mn+Co+W)=0.09; W/(Ni+Mn+Co+W)=0.01 | Co/(Ni+Mn+Co+Al)=0.03; Al/(Ni+Mn+Co+Al)=0.02 |
| Precipitant | Sodium hydroxide | Sodium hydroxide | Sodium hydroxide | Sodium hydroxide | Sodium hydroxide |
| Concentration of precipitant | 6 mol/L | 10 mol/L | 2 mol/L | 5 mol/L | 5 mol/L |
| Complexing agent | Ammonium hydroxide | Ammonium hydroxide | Ammonium hydroxide | Ammonium hydroxide | Ammonium hydroxide |
| Concentration of complexing agent | 5 mol/L | 8 mol/L | 13 mol/L | 5 mol/L | 5 mol/L |
| Reaction duration | 60 h | 80 h | 100 h | 80 h | 50 h |
| Reaction temperature | 50°C | 70°C | 55°C | 40°C | 60°C |
| pH | 11.6 | 11.2 | 12 | 11.5 | 12 |
| Stirring speed | 600 rmp | 800 rpm | 500 rpm | 700 rpm | 600 rpm |
| Solid content | 500 g/L | 1,000 g/L | 200 g/L | 800 g/L | 500 g/L |
| **Preparation process of primary sintered cathode material** | | | | | |
| Type of lithium salt | Lithium carbonate | Lithium carbonate | Lithium hydroxide | Lithium hydroxide | Lithium hydroxide |
| Type of additive M | Titanium oxide, tungsten oxide | Boric acid, praseodymium oxide | Magnesium oxide, yttrium oxide, cobalt oxide | Zirconium oxide, strontium hydroxide | Rhenium oxide, samarium oxide |
| Amount of lithium salt | Li:(Ni+Mn+Co+Al+Ti+W)=1.03 | Li:(Ni+Mn+Co+B+Pr)=1.03 | Li:(Ni+Mn+Nb+Mg+Y+Co)=1.05 | Li:(Ni+Mn+Co+W+Zr+Sr)=1.05 | Li:(Ni+Mn+Co+Al+Re+Sm)=1.02 |
| Content of additive M | Ti:(Ni+Mn+Co+Al+Ti+W)=0.003; W:(Ni+Mn+Co+Al+Ti+W)=0.002 | Ti:(Ni+Mn+Co+B+Pr)=0.001; Pr:(Ni+Mn+Co+B+Pr)=0.002 | Mg:(Ni+Mn+Nb+Mg+Y+Co)=0.005; Y:(Ni+Mn+Nb+Mg+Y+Co)=0.005; Co:(Ni+Mn+Nb+Mg+Y+Co)=0.03 | Zr:(Ni+Mn+Co+W+Zr+Sr)=0.005; Sr: (Ni+Mn+Co+W+Zr+Sr)=0.005 | Re:(Ni+Mn+Co+Al+Re+Sm)=0.002; Sm: (Ni+Mn+Co+Al+Re+Sm)=0.002 |
| First sintering atmosphere | Air | Air | Air | Oxygen | Oxygen |
| First sintering temperature | 920°C | 900°C | 850°C | 820°C | 790°C |
| First sintering duration | 10 h | 15 h | 10 h | 12 h | 20 h |

(continued)

| Preparation process of primary sintered cathode material | | | | | |
|---|---|---|---|---|---|
| Type of lithium salt | Lithium carbonate | Lithium carbonate | Lithium hydroxide | Lithium hydroxide | Lithium hydroxide |
| Preparation process of secondary sintered cathode material | | | | | |
| Type of additive M' | Niobium pentoxide, lanthanum trioxide | Aluminum fluoride, titanium dioxide | Boric acid, tungsten oxide, tantalum oxide | Aluminum phosphate, ruthenium oxide | Tungsten nitride, aluminum fluoride |
| Content of additive M' | Nb:(Ni+Mn+Co+Al+Ti+W)=0.002;  La: (Ni+Mn+Co+Al+Ti+W)=0.002 | Al:(Ni+Mn+Co+B+Pr)=0.003;  Ti:(Ni+Mn+Co+B+Pr)=0.002 | B:(Ni+Mn+Nb+Mg+Y+Co)=0.002;  W:(Ni+Mn+Nb+ | Al:(Ni+Mn+Co+W+Zr+Sr)=0.05;  Ru:(Ni+Mn+Co+W+Zr+Sr)=0.001 | W:(Ni+Mn+Co+Al+Re+Sm)=0.005;  Al:(Ni+Mn+Co+Al+Re+Sm)=0.005 |
| | | | Mg+Y+Co)=0.005;  Ta:(Ni+Mn+Nb+Mg+Y+Co)=0.003 | | |
| Second sintering atmosphere | Air | Air | Air | Oxygen | Oxygen |
| Second sintering temperature | 650°C | 450°C | 500°C | 700°C | 700°C |
| Second sintering duration | 6 h | 8 h | 10 h | 15 h | 15 h |

[Table 1 (continued)]

| | Example 6 | Example 7 | Example 8 | Example 9 | Example 10 |
|---|---|---|---|---|---|
| Preparation process of precursor | | | | | |
| Nickel salt or manganese salt | Nickel sulfate, manganese sulfate | Nickel sulfate, manganese sulfate | Nickel sulfate, manganese sulfate | Nickel sulfate, manganese sulfate | Nickel sulfate, manganese sulfate |
| Ni/Mn ratio | 9.5:0.2 | 9.7:0.2 | 3:6.5 | 3.3:6.7 | 2.5:7.5 |
| Additive M | Cobalt sulfate | Aluminum sulfate | Aluminum sulfate | / | / |
| Content of additive M | Co/(Ni+Mn+Co)=0.03 | Al/(Ni+Mn+Al)=0.01 | Al/(Ni+Mn+Al)=0.05 | / | / |
| Precipitant | Sodium hydroxide | Potassium hydroxide | Sodium hydroxide | Sodium hydroxide | Potassium hydroxide |
| Concentration of precipitant | 6 mol/L | 4 mol/L | 4 mol/L | 5 mol/L | 6 mol/L |
| Complexing agent | Ammonium hydroxide | Ammonium hydroxide | Ammonium hydroxide | Ammonium hydroxide | Ethylenediaminetetraacetic acid |
| Concentration of complexing agent | 5 mol/L | 5 mol/L | 4 mol/L | 2 mol/L | 1 mol/L |
| Reaction duration | 25 h | 80 h | 40 h | 60 h | 100 h |

(continued)

| | Example 6 | Example 7 | Example 8 | Example 9 | Example 10 |
|---|---|---|---|---|---|
| Preparation process of precursor | | | | | |
| Nickel salt or manganese salt | Nickel sulfate, manganese sulfate | Nickel sulfate, manganese sulfate | Nickel sulfate, manganese sulfate | Nickel sulfate, manganese sulfate | Nickel sulfate, manganese sulfate |
| Reaction temperature | 40°C | 50°C | 30°C | 40°C | 50°C |
| pH | 12.5 | 12.0 | 11.0 | 11.2 | 11.5 |
| Stirring speed | 800 rpm | 600 rpm | 700 rpm | 600 rpm | 500 rpm |
| Solid content | 200 g/L | 600 g/L | 300 g/L | 350 g/L | 500 g/L |
| Preparation process of primary sintered cathode material | | | | | |
| Type of lithium salt | Lithium hydroxide | Lithium hydroxide | Lithium carbonate | Lithium hydroxide | Lithium hydroxide |
| Type of additive M | Yttrium oxide, zirconium oxide | Cobalt oxy-hydroxide, strontium hy-droxide | Titanium oxide, niobium oxide | Tungsten oxide, aluminum oxyhydroxide | Cobalt hydroxide, strontium hydroxide |
| Amount of lithium salt | Li:(Ni+Mn+Co+Y+Zr)=1.03 | Li:(Ni+Mn+Al+Co+Sr)=1.03 | Li: (Ni+Mn+Al+Nb)=1.5 | Li:(Ni+Mn+W+Al)=1.4 | Li:(Ni+Mn+Co+Sr )=1.3 |
| Content of additive M | Y:(Ni+Mn+Co+Y+Zr)=0.01; Zr:(Ni+Mn+Co+Y+Zr)=0.01 | Co:(Ni+Mn+Al+Co+Sr)=0.01; Sr:(Ni+Mn+Al+Co+Sr)=0.002 | Ti:(Li+Ni+Mn+Al+Ti+Nb-1)=0.005; Nb:(Li+Ni+Mn+Al+Ti+Nb-1)=0.005 | W:(Li+Ni+Mn+W+Al-1)=0.01; Al:(Li+Ni+Mn+W+Al-1)=0.005 | Co:(Li+Ni+Mn+Co+Sr-1)=0.01; Sr:(Li+Ni+Mn+Co+Sr-1)=0.005 |
| First sintering atmosphere | Oxygen | Oxygen | Air | Air | Air |
| First sintering temperature | 775°C | 750°C | 800°C | 810°C | 850°C |
| First sintering duration | 15 h | 10 h | 15 h | 20 h | 10 h |
| Preparation process of secondary sintered cathode material | | | | | |
| Type of additive M' | Aluminum oxide, titanium phosphate | Scandium oxide, lanthanum oxide | Aluminum fluoride, zirconium oxide | Lanthanum fluoride, magnesium hydroxide | Titanium phosphate, aluminum phosphate |
| Content of additive M' | Al:(Ni+Mn+Co+Y+Zr)=0.005; Ti: (Ni+Mn+Co+Y+Zr)=0.003 | Sc:(Ni+Mn+Al+Co+Sr) =0.002; La:(Ni+Mn+Al+Co+Sr)=0.002 | Al:(Li+Ni+Mn+Al+Ti+Nb-1)=0.002; Zr:(Li+Ni+Mn+Al+Ti+Nb-1)=0.003 | La:(Li+Ni+Mn+W+Al-1)=0.005; Mg:(Li+Ni+Mn+W+Al-1)=0.001 | Ti:(Li+Ni+Mn+Co+Sr-1)=0.003; Al:(Li+Ni+Mn+Co+Sr-1)=0.002 |
| Second sintering atmosphere | Oxygen | Oxygen | Air | Air | Air |
| Second sintering temperature | 600°C | 500°C | 700°C | 450°C | 700°C |
| Second sintering duration | 10 h | 10 h | 8 h | 10 h | 10 h |

[Table 1 (continued)]

| | Example 11 | Example 12 | Example 13 | Example 14 |
|---|---|---|---|---|
| Preparation process of precursor | | | | |
| Nickel salt or manganese salt | Nickel sulfate, manganese sulfate | Nickel sulfate, manganese sulfate | Manganese chloride, nickel nitrate | Nickel chloride, manganese sulfate |
| Ni/Mn ratio | 2:3 | 1:4 | 5.5:4 | 2:8 |
| Additive M | / | Cobalt sulfate | Aluminum sulfate | / |
| Content of additive M | / | Co/(Ni+Mn+Co)=1:6 | Al/(Ni+Mn+Al)=0.5 | / |
| Precipitant | Sodium hydroxide | Sodium hydroxide | Sodium hydroxide | Sodium hydroxide |
| Concentration of precipitant | 10 mol/L | 10 mol/L | 5 mol/L | 5 mol/L |
| Complexing agent | Ammonium hydroxide | Ammonium sulfate | Ammonium hydroxide | Ammonium hydroxide |
| Concentration of complexing agent | 5 mol/L | 1 mol/L | 2 mol/L | 2 mol/L |
| Reaction duration | 75 h | 80 h | 60 h | 80 h |
| Reaction temperature | 80°C | 50°C | 50°C | 80°C |
| pH | 12.0 | 11.5 | 11.2 | 11.0 |
| Stirring speed | 800 rpm | 600 rpm | 800 rpm | 500 rpm |
| Solid content | 600 g/L | 500 g/L | 500 g/L | 400 g/L |
| Preparation process of primary sintered cathode material | | | | |
| Type of lithium salt | Lithium hydroxide | Lithium carbonate | Lithium hydroxide | Lithium hydroxide |
| Type of additive M | Chromium oxide, lanthanum oxide | Yttrium oxide, zirconium oxide | Magnesium hydroxide, titanium nitride | Tantalum oxide, niobium oxyphosphate |
| Amount of lithium salt | Li: (Ni+Mn+Cr+La)=1.6 | Li:(Ni+Mn+Co+Y+Zr )=1.35 | Li: (Ni+Mn+Al+Mg+Ti)=1.45 | Li: (Ni+Mn+Ta+Nb)=1.8 |
| Content of additive M | Cr:(Li+Ni+Mn+Cr+La-1)=0.002; La:(Li+Ni+Mn+Cr+La-1)=0.002 | Y:(Li+Ni+Mn+Co+Y+Zr-1)=0.005; Zr:(Li+Ni+Mn+Co+Y+Zr-1)=0.005 | Mg:(Li+Ni+Mn+Al+Mg+Ti-1)=0.01; Ti:(Li+Ni+Mn+Al+Mg+Ti-1)=0.005 | Ta:(Li+Ni+Mn+Ta+Nb-1)=0.1; Nb:(Li+Ni+Mn+Ta+Nb-1)=0.1 |
| First sintering atmosphere | Oxygen | Air | Air | Oxygen |
| First sintering temperature | 780°C | 800°C | 740°C | 900°C |
| First sintering duration | 15 h | 10 h | 15 h | 20 h |

(continued)

| Preparation process of secondary sintered cathode material | | | | |
|---|---|---|---|---|
| Type of additive M' | Boric acid, rhenium oxide | Aluminum oxide, tungsten oxide | Cobalt oxide, titanium dioxide | Molybdenum oxide, tungsten sulfide |
| Content of additive M' | B:(Li+Ni+Mn+Cr+La-1)=0.002; <br><br> Re:(Li+Ni+Mn+Cr+La-1)=0.002 | Al:(Li+Ni+Mn+Co+Y+Zr-1)=0.005; <br><br> W:(Li+Ni+Mn+Co+Y+Zr-1)=0.005 | Co:(Li+Ni+Mn+Al+Mg+Ti-1)=0.01; <br><br> Ti:(Li+Ni+Mn+Al+Mg+Ti-1)=0.005 | Mo: (Li+Ni+Mn+Ta+Nb-1) =0.002; <br><br> W: (Li+Ni+Mn+Ta+Nb-1) =0.005 |
| Second sintering atmosphere | Oxygen | Air | Air | Oxygen |
| Second sintering temperature | 350°C | 600°C | 650°C | 700°C |
| Second sintering duration | 20 h | 6 h | 6 h | 10 h |

In Table 1, unless otherwise specified, all ratios and amounts were molar ratios.

**Comparative Example 1**

Comparative Example 1 adopted the same synthesis method and conditions as in Example 5. Comparative Example 1 merely differed from Example 5 in that, the first sintering temperature was adjusted to 600°C, and the cathode material obtained was recorded as D-1, as shown in Table 2.

**Comparative Example 2**

Comparative Example 2 adopted the same synthesis method and conditions as in Example 5. Comparative Example 2 merely differed from Example 5 in that, the first sintering temperature was adjusted to 900°C, and the cathode material obtained was recorded as D-2, as shown in Table 2.

**Comparative Example 3**

Comparative Example 3 adopted the same synthesis method and conditions as in Example 5. Comparative Example 3 merely differed from Example 5 in that, additives of rhenium oxide and samarium oxide were not added in the preparation process of the primary sintered cathode material, and the cathode material obtained was recorded as D-3, as shown in Table 2.

**Comparative Example 4**

Comparative Example 4 adopted the same synthesis method and conditions as in Example 5. Comparative Example 4 merely differed from Example 5 in that, additives of tungsten nitride and aluminum fluoride were not added in the preparation process of the secondary sintered cathode material, and the cathode material obtained was recorded as D-4, as shown in Table 2.

**Comparative Example 5**

Comparative Example 5 adopted the same synthesis method and conditions as in Example 9. Comparative Example 5 merely differed from Example 9 in that, the solid content was adjusted to 150 g/L in the preparation process of the precursor, and the cathode material obtained was recorded as D-5, as shown in Table 2.

## Comparative Example 6

Comparative Example 6 adopted the same synthesis method and conditions as in Example 9. Comparative Example 6 merely differed from Example 9 in that, additives of tungsten oxide and aluminum hydroxide oxide were not added in the preparation process of the primary sintered cathode material, and the cathode material obtained was recorded as D-6, as shown in Table 2.

## Comparative Example 7

Comparative Example 7 adopted the same synthesis method and conditions as in Example 9. Comparative Example 7 merely differed from Example 9 in that, the preparation process of the secondary sintered cathode material was omitted, and the cathode material obtained was recorded as D-7, as shown in Table 2.

[Table 2]

| | Comparative Example 1 | Comparative Example 2 | Comparative Example 3 | Comparative Example 4 |
|---|---|---|---|---|
| Preparation process of precursor | | | | |
| Nickel salt or manganese salt | Nickel sulfate, manganese sulfate | Nickel sulfate, manganese sulfate | Nickel sulfate, manganese sulfate | Nickel sulfate, manganese sulfate |
| Ni/Mn ratio | 9:0.5 | 9:0.5 | 9:0.5 | 9:0.5 |
| Additive M | Cobalt sulfate, aluminum sulfate | Cobalt sulfate, aluminum sulfate | Cobalt sulfate, aluminum sulfate | Cobalt sulfate, aluminum sulfate |
| Content of additive M | Co/(Ni+Mn+Co+Al) =0. 03; Al/(Ni+Mn+Co+Al) =0. 02 | Co/(Ni+Mn+Co+Al)= 0.03; Al/(Ni+Mn+Co+Al)= 0.02 | Co/(Ni+Mn+Co+Al) =0. 03; Al/(Ni+Mn+Co+Al) =0. 02 | Co/(Ni+Mn+Co+Al) =0.03; Al/(Ni+Mn+Co+Al) =0.02 |
| Precipitant | Sodium hydroxide | Sodium hydroxide | Sodium hydroxide | Sodium hydroxide |
| Concentration of precipitant | 5 mol/L | 5 mol/L | 5 mol/L | 5 mol/L |
| Complexing agent | Ammonium hydroxide | Ammonium hydroxide | Ammonium hydroxide | Ammonium hydroxide |
| Concentration of complexing agent | 5 mol/L | 5 mol/L | 5 mol/L | 5 mol/L |
| Reaction duration | 50 h | 50 h | 50 h | 50 h |
| Reaction temperature | 60°C | 60°C | 60°C | 60°C |
| pH | 12.0 | 12.0 | 12.0 | 12.0 |
| Stirring speed | 600 rpm | 600 rpm | 600 rpm | 600 rpm |
| Solid content | 500 g/L | 500 g/L | 500 g/L | 500 g/L |
| Preparation process of primary sintered cathode material | | | | |
| Type of lithium salt | Lithium hydroxide | Lithium hydroxide | Lithium hydroxide | Lithium hydroxide |
| Type of additive M | Rhenium oxide, samarium oxide | Rhenium oxide, samarium oxide | / | Rhenium oxide, samarium oxide |

(continued)

| Preparation process of primary sintered cathode material | | | | |
|---|---|---|---|---|
| Type of lithium salt | Lithium hydroxide | Lithium hydroxide | Lithium hydroxide | Lithium hydroxide |
| Amount of lithium salt | Li: (Ni+Mn+Co+Al+Re+Sm)=1.02 | Li: (Ni+Mn+Co+Al+Re+Sm)=1.02 | Li:(Ni+Mn+Co+Al)=1. 02 | Li: (Ni+Mn+Co+Al+Re+Sm)=1.02 |
| Content of additive M | Re: (Ni+Mn+Co+Al+Re+Sm)=0.002; Sm: (Ni+Mn+Co+Al+Re+Sm)=0.002 | Re:(Ni+Mn+Co+Al+Re+Sm)=0.002; Sm: (Ni+Mn+Co+Al+Re+Sm)=0.002 | / | Re: (Ni+Mn+Co+Al+Re+Sm)=0.002; Sm: (Ni+Mn+Co+Al+Re+Sm)=0.002 |
| First sintering atmosphere | Oxygen | Oxygen | Oxygen | Oxygen |
| First sintering temperature | 600°C | 900°C | 790°C | 790°C |
| First sintering duration | 20 h | 20 h | 20 h | 20 h |
| Preparation process of secondary sintered cathode material | | | | |
| Type of additive M' | Tungsten nitride, aluminum fluoride | Tungsten nitride, aluminum fluoride | Tungsten nitride, aluminum fluoride | / |
| Content of additive M' | W: (Ni+Mn+Co+Al+Re+Sm)=0.005; Al: (Ni+Mn+Co+Al+Re+Sm)=0.005 | W:(Ni+Mn+Co+Al+Re+Sm)=0.005; Al:(Ni+Mn+Co+Al+Re+Sm)=0.005 | W: (Ni+Mn+Co+Al+Re+Sm)=0.005; Al: (Ni+Mn+Co+Al+Re+Sm)=0.005 | / |
| Second sintering atmosphere | Oxygen | Oxygen | Oxygen | Oxygen |
| Second sintering temperature | 700°C | 700°C | 700°C | 700°C |
| Second sintering duration | 15h | 15h | 15 h | 15h |

[Table 2 (continued)]

| | Comparative Example 5 | Comparative Example 6 | Comparative Example 7 |
|---|---|---|---|
| Preparation process of precursor | | | |
| Nickel salt or manganese salt | Nickel sulfate, manganese sulfate | Nickel sulfate, manganese sulfate | Nickel sulfate, manganese sulfate |
| Ni/Mn ratio | 3.3:6.7 | 3.3:6.7 | 3.3:6.7 |
| Additive M | / | / | / |
| Content of additive M | / | / | / |
| Precipitant | Sodium hydroxide | Sodium hydroxide | Sodium hydroxide |
| Concentration of precipitant | 5 mol/L | 5 mol/L | 5 mol/L |
| Complexing | Ammonium hydroxide | Ammonium hydroxide | Ammonium hydroxide |

(continued)

| | Comparative Example 5 | Comparative Example 6 | Comparative Example 7 |
|---|---|---|---|
| Preparation process of precursor | | | |
| agent | | | |
| Concentration of complexing agent | 2 mol/L | 2 mol/L | 2 mol/L |
| Reaction duration | 30 h | 60 h | 60 h |
| Reaction temperature | 40°C | 40°C | 40°C |
| pH | 11.2 | 11.2 | 11.2 |
| Stirring speed | 600 rpm | 600 rpm | 600 rpm |
| Solid content | 150 g/L | 350 g/L | 350 g/L |
| Preparation process of primary sintered cathode material | | | |
| Type of lithium salt | Lithium hydroxide | Lithium hydroxide | Lithium hydroxide |
| Type of additive M | Tungsten oxide, aluminum hydroxide oxide | / | Tungsten oxide, aluminum hydroxide oxide |
| Amount of lithium salt | Li:(Ni+Mn+W+Al)=1.4 | Li:(Ni+Mn)=1.4 | Li:(Ni+Mn+W+Al)=1.4 |
| Content of additive M | W: (Li+Ni+Mn+W+Al-1) =0.01; Al:(Li+Ni+Mn+W+Al-1) =0.005 | / | W:(Li+Ni+Mn+W+Al-1) =0.01 Al:(Li+Ni+Mn+W+Al-1) =0.005 |
| First sintering atmosphere | Air | Air | Air |
| First sintering temperature | 810°C | 810°C | 810°C |
| First sintering duration | 20 h | 20 h | 20 h |
| Preparation process of secondary sintered cathode material | | | |
| Type of additive M' | Lanthanum fluoride, magnesium hydroxide | Lanthanum fluoride, magnesium hydroxide | / |
| Content of additive M' | La:(Li+Ni+Mn+W+Al-1) =0.005; Mg:(Li+Ni+Mn+W+Al-1) =0.001 | La:(Li+Ni+Mn+W+Al-1) =0.005; Mg:(Li+Ni+Mn+W+Al-1) =0.001 | / |
| Second sintering atmosphere | Air | Air | / |
| Second sintering temperature | 450°C | 450°C | / |
| Second sintering duration | 10 h | 10 h | / |

**Test Example 1**

The performances of the precursors of the lithium-containing oxide cathode materials prepared in Example 1 to Example 14 and Comparative Example 1 to Comparative Example 7 were tested, and the results were shown in Table 3. The performances of the lithium-containing oxide cathode materials prepared in Example 1 to Example 14 and Comparative Example 1 to Comparative Example 7 were tested, and the results were shown in Table 4 and Table 5.

[Table 3]

| Precursor | Chemical formula | $\Delta\lambda'(P_{50})$ | $\Delta\lambda'(P_{100})$ |
|---|---|---|---|
| Example 1 | $Ni_{0.5}Mn_{0.3}Co_{0.18}Al_{0.02}(OH)_2$ | 49.8% | 38.9% |
| Example 2 | $Ni_{0.6}Mn_{0.2}Co_{0.2}(OH)_2$ | 43.7% | 37.6% |
| Example 3 | $Ni_{0.75}Mn_{0.24}Nb_{0.01}(OH)_2$ | 45.6% | 37.5% |
| Example 4 | $Ni_{0.8}Mn_{0.1}Co_{0.09}W_{0.01}(OH)_2$ | 44.2% | 32.4% |
| Example 5 | $Ni_{0.9}Mn_{0.05}Co_{0.03}Al_{0.02}(OH)_2$ | 45.4% | 30.4% |
| Example 6 | $Ni_{0.95}Mn_{0.02}Co_{0.03}(OH)_2$ | 45.2% | 33.3% |
| Example 7 | $Ni_{0.97}Mn_{0.02}Al_{0.01}(OH)_2$ | 45.6% | 32.6% |
| Example 8 | $Ni_{0.3}Mn_{0.65}Al_{0.05}(OH)_2$ | 53.2% | 42.4% |
| Example 9 | $Ni_{0.33}Mn_{0.67}(OH)_2$ | 51.6% | 42.6% |
| Example 10 | $Ni_{0.25}Mn_{0.75}(OH)_2$ | 60.6% | 50.0% |
| Example 11 | $Ni_{0.4}Mn_{0.6}(OH)_2$ | 48.3% | 38.3% |
| Example 12 | $Ni_{0.167}Co_{0.167}Mn_{0.666}(OH)_2$ | 67.8% | 57.2% |
| Example 13 | $Ni_{0.4}Mn_{0.55}Al_{0.05}(OH)_2$ | 48.8% | 38.6% |
| Example 14 | $Ni_{0.2}Mn_{0.8}(OH)_2$ | 67.6% | 57.5% |
| Comparative Example 1 | $Ni_{0.9}Mn_{0.05}Co_{0.03}Al_{0.02}(OH)_2$ | 45.4% | 30.4% |
| Comparative Example 2 | $Ni_{0.9}Mn_{0.05}Co_{0.03}Al_{0.02}(OH)_2$ | 45.4% | 30.4% |
| Comparative Example 3 | $Ni_{0.9}Mn_{0.05}Co_{0.03}Al_{0.02}(OH)_2$ | 45.4% | 30.4% |
| Comparative Example 4 | $Ni_{0.9}Mn_{0.05}Co_{0.03}Al_{0.02}(OH)_2$ | 45.4% | 30.4% |
| Comparative Example 5 | $Ni_{0.33}Mn_{0.67}(OH)_2$ | 42.3% | 33.6% |
| Comparative Example 6 | $Ni_{0.33}Mn_{0.67}(OH)_2$ | 51.6% | 42.6% |
| Comparative Example 7 | $Ni_{0.33}Mn_{0.67}(OH)_2$ | 51.6% | 42.6% |

[Table 4]

| Cathode material | Example 1 | Example 2 | Example 3 | Example 4 | Example 5 |
|---|---|---|---|---|---|
| Chemical formula | Li[Ni$_{0.4975}$Mn$_{0.2985}$Co$_{0.1791}$Al$_{0.0199}$Ti$_{0.003}$W$_{0.002}$]O$_2$@0.001Nb$_2$O$_5$·0.001La$_2$O$_3$ | Li[Ni$_{0.5982}$Mn$_{0.1994}$Co$_{0.1994}$B$_{0.001}$Pr$_{0.002}$]O$_2$@0.003AlF3·0.002TiO$_2$ | Li[Ni$_{0.72}$Mn$_{0.2304}$Nb$_{0.0096}$Co$_{0.03}$Mg$_{0.005}$Y$_{0.005}$]O$_2$@0.001B$_2$O$_3$·0.005WO$_3$·0.0015Ta$_2$O$_5$ | Li[Ni$_{0.792}$Mn$_{0.099}$Co$_{0.0891}$W$_{0.0099}$Zr$_{0.005}$Sr$_{0.005}$]O$_2$@0.05AlPO$_4$·0.001RuO$_2$ | Li[Ni$_{0.8964}$Mn$_{0.0498}$Co$_{0.0299}$Al$_{0.0199}$Re$_{0.002}$Sm$_{0.002}$]O$_2$@0.0025W$_2$O$_3$·0.005AlF$_3$ |
| $\Delta\lambda$ (P$_{100}$) | 69.9% | 67.8% | 65.8% | 65% | 66.2% |
| $\Delta\lambda$ (P$_{200}$) | 52.5% | 49.7% | 48.6% | 48.2% | 48.5% |
| $\Delta\lambda$ (P$_{300}$) | 39.4% | 38.1% | 38% | 37.7% | 37.8% |
| Tap density | 2.4 | 2.7 | 2.1 | 2.4 | 2.5 |
| Pellet density | 3.2 | 3.3 | 3.5 | 3.3 | 3.7 |
| Li$_2$CO$_3$ | 0.1% | 0.2% | 0.15% | 0.18% | 0.26% |
| LiOH | 0.1% | 0.21% | 0.25% | 0.33% | 0.28% |
| FWHM$_{(003)}$ | 0.17 | 0.18 | 0.19 | 0.18 | 0.18 |
| FWHM$_{(104)}$ | 0.24 | 0.25 | 0.28 | 0.26 | 0.27 |
| S$_{(003)}$/S$_{(104)}$ | 1.3 | 1.26 | 1.22 | 1.3 | 1.35 |

EP 4 485 573 A1

[Table 4 (continued)]

| Cathode material | Example 6 | Example 7 | Example 8 | Example 9 | Example 10 |
|---|---|---|---|---|---|
| Chemical formula | $Li[Ni_{0.931}Mn_{0.0196}Co_{0.0294}Y_{0.01}Zr_{0.01}]$ $O_2@0.0025Al_2O_3\cdot 0.001Ti_3PO_4$ | $Li[Ni_{0.9405}Mn_{0.0198}Al_{0.0297}Co_{0.01}Sr_{0.002}]$ $O_2@0.001Sc_2O_3\cdot 0.001La_2O_3$ | $Li[Li_{0.2}Ni_{0.237}Mn_{0.513\ 5}Al_{0.0395}Ti_{0.005}Nb_{0.005}]$ $O_2@0.002AlF3\cdot 0.00\ 3ZrO_2$ | $Li[Li_{0.167}Ni_{0.2699}Mn_{0.5481}W_{0.01}Al_{0.005}]$ $O_2@0.005LaF_3\cdot 0.001MgO$ | $Li[Li_{0.131}Ni_{0.2135}Mn_{0.6405}Co_{0.01}Sr_{0.005}]$ $O_2@0.001Ti_3PO_4\cdot 0.002AlPO_4$ |
| $\Delta\lambda(P_{100})$ | 64.2% | 64.1% | 75.8% | 73.3% | 78.6% |
| $\Delta\lambda(P_{200})$ | 47.5% | 47.2% | 60.8% | 58.9% | 62.2% |
| $\Delta\lambda(P_{300})$ | 37.1% | 36.9% | 47.2% | 46.3% | 52.8% |
| Tap density | 2.4 | 1.8 | 1.7 | 1.8 | 1.7 |
| Pellet density | 3.4 | 3.5 | 2.8 | 2.9 | 2.6 |
| $Li_2CO_3$ | 0.45% | 0.26% | 0.16% | 0.16% | 0.15% |
| LiOH | 0.5% | 0.17% | 0.07% | 0.14% | 0.12% |
| $FWHM_{(003)}$ | 0.2 | 0.22 | 0.22 | 0.2 | 0.16 |
| $FWHM_{(104)}$ | 0.28 | 0.3 | 0.41 | 0.38 | 0.37 |
| $S_{(003)}/S_{(104)}$ | 1.36 | 1.38 | 1.22 | 1.32 | 1.34 |

[Table 5]

| Cathode material | Comparative Example 1 | Comparative Example 2 | Comparative Example 3 | Comparative Example 4 | Comparative Example 5 | Comparative Example 6 | Comparative Example 7 |
|---|---|---|---|---|---|---|---|
| Chemical formula | Li[Ni$_{0.8964}$Mn$_{0.0498}$Co$_{0.0299}$Al$_{0.0199}$Re$_{0.002}$]O$_2$@0.0025W$_2$O$_3$·0.005AlF$_3$ | Li[Ni$_{0.8964}$Mn$_{0.0498}$Co$_{0.0299}$Al$_{0.0199}$Re$_{0.002}$Sm$_{0.002}$]O$_2$@0.0025W$_2$O$_3$·0.005AlF$_3$ | Li[Ni$_{0.9}$Mn$_{0.05}$Co$_{0.03}$Al$_{0.02}$]O$_2$@0.0025W$_2$O$_3$·0.005AlF$_3$ | Li[Ni$_{0.8964}$Mn$_{0.0498}$Co$_{0.0299}$Al$_{0.0199}$Re$_{0.0199}$Sm$_{0.002}$]O$_2$ | Li[Li$_{0.167}$Ni$_{0.2699}$Mn$_{0.5481}$W$_{0.01}$Al$_{0.005}$]O$_2$@0.005LaF$_3$·0.001MgO | Li[Li$_{0.167}$Ni$_{0.2777}$Mn$_{0.5553}$]O$_2$@0.005LaF$_3$·0.001MgO | Li[Li$_{0.167}$Ni$_{0.2699}$Mn$_{0.5481}$W$_{0.01}$Al$_{0.005}$]O$_2$ |
| $\Delta\lambda$(P$_{100}$) | 53.2% | 57.7% | 55.5% | 50.1% | 55.6% | 66.3% | 63.8% |
| $\Delta\lambda$(P$_{200}$) | 44.2% | 45.0% | 44.7% | 41.5% | 48.2% | 51.6% | 53.2% |
| $\Delta\lambda$(P$_{300}$) | 30.3% | 33.8% | 32.6% | 29.9% | 38.6% | 40.3% | 42.1% |
| Tap density | 2.2 g/cm³ | 2.4 g/cm³ | 2.4 g/cm³ | 2.4 g/cm³ | 1.5 g/cm³ | 1.6 g/cm3 | 1.6 g/cm³ |
| Pellet density | 3.2 g/cm³ | 3.5 g/cm³ | 3.5 g/cm³ | 3.5 g/cm³ | 2.5 g/cm³ | 2.6 g/cm³ | 2.7 g/cm³ |
| Li$_2$CO$_3$ | 0.59% | 0.36% | 0.42% | 0.52% | 0.32% | 0.46% | 0.42% |
| LiOH | 0.35% | 0.22% | 0.33% | 0.35% | 0.28% | 0.30% | 0.30% |
| FWHM$_{(003)}$ | 0.32 | 0.08 | 0.16 | 0.18 | 0.23 | 0.24 | 0.25 |
| FWHM$_{(104)}$ | 0.45 | 0.18 | 0.23 | 0.25 | 0.43 | 0.44 | 0.44 |

(continued)

| Cathode material | Comparative Example 1 | Comparative Example 2 | Comparative Example 3 | Comparative Example 4 | Comparative Example 5 | Comparative Example 6 | Comparative Example 7 |
|---|---|---|---|---|---|---|---|
| $S_{(003)}/S_{(10-4)}$ | 0.92 | 1.05 | 1.65 | 1.43 | 1.71 | 1.1 | 1.15 |

**Test Example 2**

The lithium-containing oxide cathode materials prepared in Example 1 to Example 14 and Comparative Example 1 to Comparative Example 7 were used as the positive electrode plate of the lithium-ion battery to prepare the lithium-ion battery. The performances of the lithium-ion batteries were tested, and the results were shown in Table 6.

[Table 6]

| Lithium-ion battery | Example 1 | Example 2 | Example 3 | Example 4 | Example 5 | Example 6 | Example 7 |
|---|---|---|---|---|---|---|---|
| Electrode density (g/cm$^3$) | 3.2 | 3.2 | 3.5 | 3.4 | 3.6 | 3.3 | 3.5 |
| 0.1C discharge capacity (mAh/g) | 173.1 | 181.3 | 192.3 | 208.7 | 225.2 | 228.3 | 233.5 |
| 1C discharge capacity (mAh/g) | 158.6 | 167.1 | 176.5 | 192.2 | 214.3 | 216.2 | 218.5 |
| 1C capacity/0.1C capacity (%) | 91.6 | 92.2 | 91.8 | 92.1 | 95.1 | 94.7 | 93.6 |
| Capacity retention rate (%) | 99.1 | 95.2 | 94.8 | 99.0 | 94.6 | 96.3 | 93.3 |

[Table 6 (continued)]

| Lithium-ion battery | Example 8 | Example 9 | Example 10 | Example 11 | Example 12 | Example 13 | Example 14 |
|---|---|---|---|---|---|---|---|
| Electrode density (g/cm$^3$) | 3.0 | 3.0 | 2.8 | 3.0 | 3.0 | 3.2 | 3.2 |
| 0.1C discharge capacity (mAh/g) | 244.2 | 250.7 | 262.1 | 245.5 | 278.9 | 275.3 | 239.7 |
| 1C discharge capacity (mAh/g) | 211.3 | 214.5 | 225.0 | 216.2 | 240.3 | 236.7 | 202.2 |
| 1C capacity/0.1C capacity (%) | 86.5 | 85.6 | 85.8 | 88.1 | 86.2 | 86.0 | 84.4 |
| Capacity retention rate (%) | 92.1 | 93.9 | 93.2 | 94.8 | 88.6 | 89.5 | 93.4 |

[Table 6 (continued)]

| Lithium-ion battery | Comparative Example 1 | Comparative Example 2 | Comparative Example 3 | Comparative Example 4 | Comparative Example 5 | Comparative Example 6 | Comparative Example 7 |
|---|---|---|---|---|---|---|---|
| Electrode density (g/cm$^3$) | 3.2 | 3.6 | 3.5 | 3.3 | 2.8 | 2.8 | 2.9 |
| 0.1C discharge capacity (mAh/g) | 216.9 | 208.3 | 221.7 | 214.3 | 240.9 | 241.9 | 233.0 |
| 1C discharge capacity (mAh/g) | 190.9 | 188.5 | 200.2 | 194.4 | 203.3 | 198.8 | 190.3 |
| 1C capacity/0.1C capacity (%) | 88.0 | 90.5 | 90.3 | 90.7 | 84.4 | 82.2 | 81.7 |
| Capacity retention rate (%) | 86.7 | 85.9 | 87.5 | 86.6 | 88.0 | 89.0 | 89.9 |

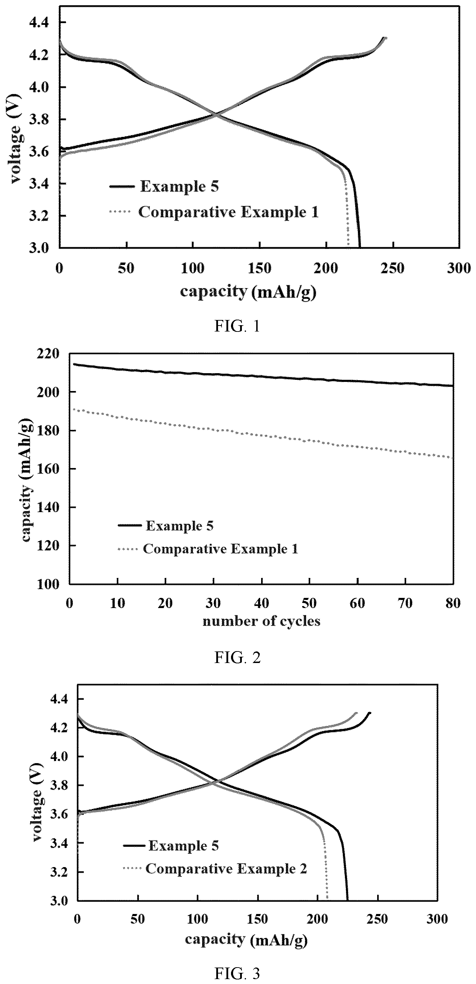

In addition, in the present disclosure, FIG. 1 is a schematic comparison graph of charge-discharge curves of Example 5 and Comparative Example 1. As revealed in FIG. 1, by comparing the charge-discharge curves of Example 5 and Comparative Example 1, 0.1C discharge capacity of the cathode material according to Example 5 (225.2 mAh/g) is higher than that of the cathode material D-1 obtained when the first sintering temperature is excessively low (600°C) (216.9 mAh/g).

FIG. 2 is a schematic comparison graph of cycle performance of Example 5 and Comparative Example 1. As revealed in FIG. 2, by comparing the cycle performance of Example 5 and Comparative Example 1, a capacity retention rate according to Example 5 (94.6%) is significantly higher than that of the cathode material D-1 (86.7%). The reason therefor may be in the excessively low sintering temperature, and thus the growth of primary crystal grains is incomplete, resulting in a low compressive index and unstable structure, and thus exhibiting low capacity and cycle performance.

FIG. 3 is a schematic comparison graph of charge-discharge curves of Example 5 and Comparative Example 2. It can be seen from FIG. 3 by comparing the charge-discharge curves of Example 5 and Comparative Example 2 that 0.1C discharge capacity of the cathode material according to Example 5 (225.2 mAh/g) is higher than that of the cathode material D-2 obtained when the first sintering temperature is excessively high (900°C) (208.3 mAh/g).

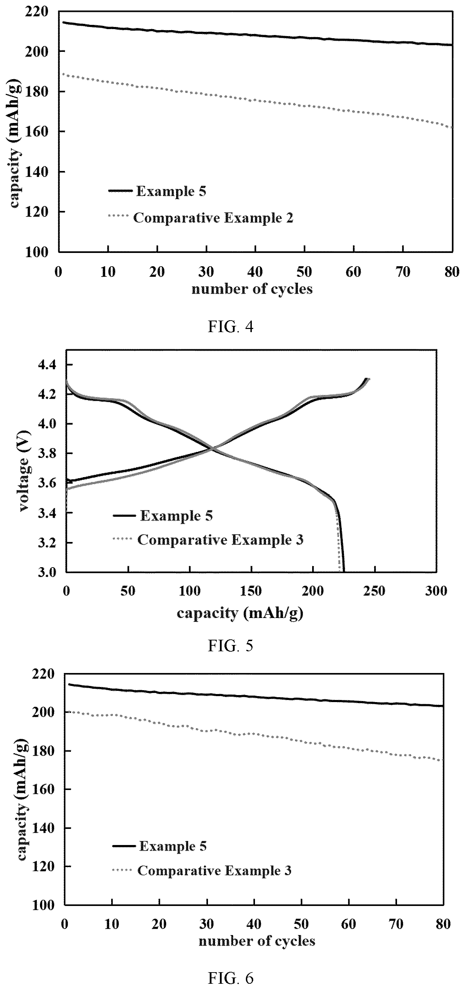

FIG. 4 is a schematic comparison graph of cycle performance of Example 5 and Comparative Example 2. It can be seen from FIG. 4 by comparing the cycle performance of Example 5 and Comparative Example 2 that capacity retention rate according to Example 5 (94.6%) is significantly higher than that of the cathode material provided by D-2 (85.9%). The reason may be in that the sintering temperature is excessively high, the growth of primary crystal grains is excessive, which may lead to a low compressive index and unstable structure, thereby causing low capacity and cycle performance.

FIG. 5 is a schematic comparison graph of charge-discharge curves of Example 5 and Comparative Example 3. It can be seen from FIG. 5 by comparing the charge-discharge curves of Example 5 and Comparative Example 3 that 0.1C discharge capacity according to Example 5 (225.2 mAh/g) is higher than that of the cathode material D-3 obtained when additives of rhenium oxide and samarium oxide are not added in the first sintering (221.7 mAh/g).

FIG. 6 is a schematic comparison graph of cycle performance of Example 5 and Comparative Example 3. It can be seen from FIG. 6 by comparing the cycle performance of Example 5 and Comparative Example 3 that the capacity retention rate according to Example 5 (94.6%) is significantly higher than that of the cathode material D-3 (87.5%). The above shows that the addition of additives, i.e., rhenium oxide and samarium oxide, in the first sintering can improve the capacity and cycle performance of the material. The reason may be in that appropriate doping modification can improve micro-area structure of the material and form lithium-containing compounds on the surface of the particles or between the particles, which are all conducive to improving the compressive index of the material, thereby improving the electrochemical performance such as the capacity and cycle performance of the cathode material.

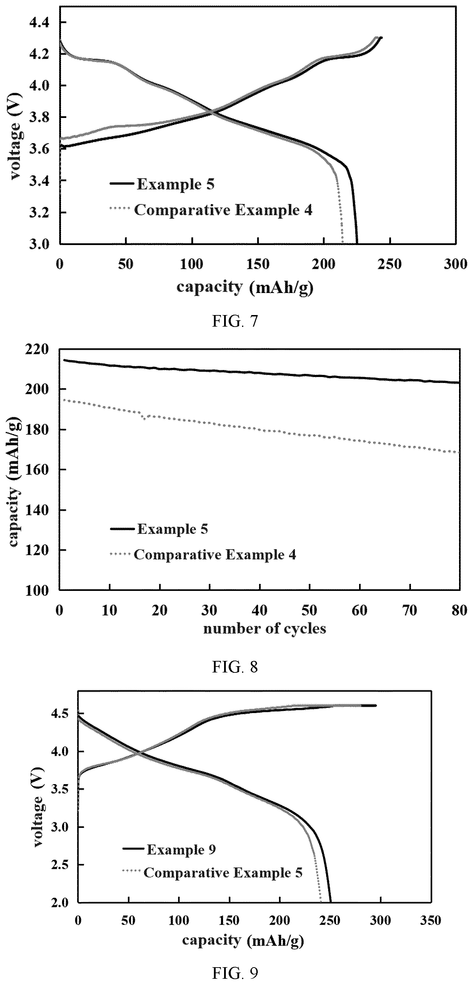

FIG. 7 is a schematic comparison graph of charge-discharge curves of Example 5 and Comparative Example 4. It can be seen from FIG. 7 by comparing the charge-discharge curves of Example 5 and Comparative Example 4 that 0.1C discharge capacity according to Example 5 (225.2 mAh/g) is significantly higher than that of the cathode material D-4 obtained when additives of tungsten nitride and aluminum fluoride are not added in the second sintering (214.3 mAh/g).

FIG. 8 is a schematic comparison graph of cycle performance of Example 5 and Comparative Example 4. It can be seen from FIG. 8 by comparing the cycle performance of Example 5 and Comparative Example 4 that the capacity retention rate according to Example 5 (94.6%) is significantly higher than that of the cathode material D-4 (86.6%). The above indicate that the addition of additives, i.e., tungsten nitride and aluminum fluoride, in the second sintering can improve the capacity and cycle performance of the material. The reason may be in that a stable coating layer may be formed on the surface of the material, which improves surface micro-area structure of the material, reduces surface side reactions of the material, and also helps to improve the compressive index of the material, thereby improving the electrochemical performance such as the capacity and cycle performance of the cathode material.

FIG. 9 is a schematic comparison graph of charge-discharge curves of Example 9 and Comparative Example 5. It can be seen from FIG. 9 by comparing the charge-discharge curves of Example 9 and Comparative Example 5 that 0.1C discharge capacity according to Example 9 (250.7 mAh/g) is significantly higher than that of the cathode material D-5 obtained when the solid content is reduced to 150 g/L in the preparation process of the precursor (240.9 mAh/g).

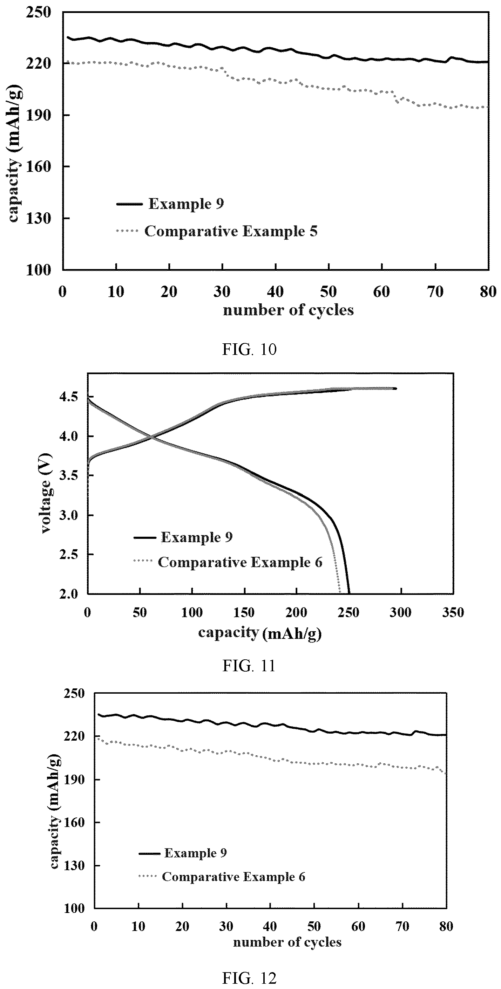

FIG. 10 is a schematic comparison graph of cycle performance of Example 9 and Comparative Example 5. It can be seen from FIG. 10 by comparing the cycle performance of Example 9 and Comparative Example 5 that the capacity retention rate according to Example 9 (93.9%) is significantly higher than that of the cathode material D-5 (88.0%). The reason may be in that low solid content may lead to poor crystallinity and compactness of the precursor, as well as changes in morphology and microstructure, thereby exhibiting a low compressive index and leading to deterioration of the electrochemical performance such as the capacity and cycle performance of the material.

FIG. 11 is a schematic comparison graph of charge-discharge curves of Example 9 and Comparative Example 6. It can be seen from FIG. 11 by comparing the charge-discharge curves of Example 9 and Comparative Example 6 that 0.1C discharge capacity according to Example 9 (250.7 mAh/g) is significantly higher than that of the cathode material D-6 obtained when additives of tungsten oxide and aluminum hydroxide oxide are not added in the first sintering.

FIG. 12 is a schematic comparison graph of cycle performance of Example 9 and Comparative Example 6. It can be seen from FIG. 12 by comparing the cycle performance of Example 9 and Comparative Example 6 that the capacity retention rate according to Example 9 (93.9%) is significantly higher than that of the cathode material D-6 (89.0%). The above shows that the addition of additives of tungsten oxide and aluminum hydroxide oxide in the first sintering can improve the capacity and cycle performance of the material. The reason may be in that appropriate doping modification can improve the micro-area structure of the material and form lithium-containing compounds on the surface of the particles or between the particles, which are all conducive to improving the compressive index of the material, thereby improving the electrochemical performance such as the capacity and cycle performance of the cathode material.

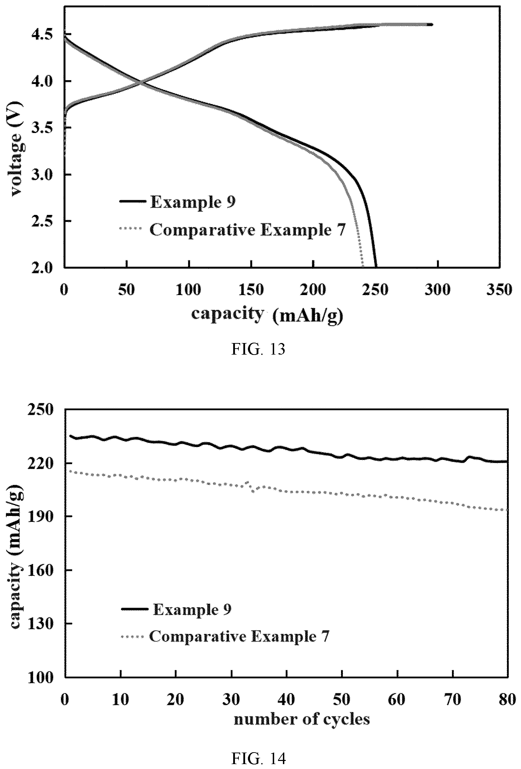

FIG. 13 is a schematic comparison graph of charge-discharge curves of Example 9 and Comparative Example 7. It can be seen from FIG. 13 by comparing the charge-discharge curves of Example 9 and Comparative Example 7 that 0.1C discharge capacity according to Example 9 (250.7 mAh/g) is significantly higher than that of the cathode material D-7 obtained without the second sintering process.

FIG. 14 is a schematic comparison graph of cycle performance of Example 9 and Comparative Example 7. It can be seen from FIG. 14 by comparing the cycle performance of Example 9 and Comparative Example 7 that the capacity retention rate according to Example 9 (93.9%) is significantly higher than that of the cathode material D-7 (89.9%). The above indicates that the second sintering can effectively improve the capacity and cycle performance of the material. The reason may be in that the second sintering process can form a stable coating layer on the surface of the material and rearrange atoms on the surface of the material, thereby improving the surface micro-area structure of the material, reducing the surface side reactions of the material, and improving the compressive index of the material. In this way, the electrochemical performance such as the capacity and cycle performance of the cathode material can be improved.

The preferred embodiments of the present disclosure are described in detail above. However, the present disclosure is not limited thereto. Within the scope of technical conception of the present disclosure, a variety of simple variations may be made to the technical solutions of the present disclosure, including the combination of various technical features in any other suitable manner. These simple variations and combinations shall be regarded as the contents disclosed by the present disclosure, and all of them fall within the scope of protection of the present disclosure.

## Claims

1.  A lithium-containing oxide cathode material, wherein:
    the cathode material has a compressive index $\Delta\lambda(P_{100})$ satisfying $\Delta k(P_{100})\geq 60\%+(y/x)\times 5\%$, where $y/x$ is a molar ratio of Mn/Ni in the cathode material.

2.  The cathode material according to claim 1, wherein:

    the cathode material has a compressive index $\Delta\lambda(P_{200})$ satisfying $\Delta\lambda(P_{200})\geq 45\%+(y/x)\times 5\%$; and/or
    the cathode material has a compressive index $\Delta\lambda(P_{300})$ satisfying $\Delta\lambda(P_{300})\geq 35\%+(y/x)\times 5\%$.

3.  The lithium-containing oxide cathode material according to claim 1 or 2, wherein the lithium-containing oxide cathode material has a chemical formula represented by Formula (3):

    $$Li[Li_aNi_xMn_yM_j]O_2@M', \qquad \text{Formula (3)},$$

    where:

    $0\leq a\leq 0.3$; $0.2<x<1$; $0<y\leq 0.75$; $0<j\leq 0.35$; M is selected from at least one element of Al, Zr, Nb, Ti, Y, Sc, Cr, Co, W, Mg, La, Os, Pr, Re, Ru, Sr, Sm, Ta, and B; M' is an oxide, phosphide, sulfide, fluoride, or chloride containing at least one element of Al, Zr, Nb, Ti, Y, Sc, Cr, Co, W, Mg, La, Os, Pr, Re, Ru, Sr, Sm, Ta, and B; and a molar content of cations in M' is w, w satisfying $0<w/(a+x+y+j)\leq 0.1$; and
    preferably, $0.02\leq a\leq 0.2$; $0.3<x<0.9$; $0.05<y\leq 0.68$; $0<j\leq 0.3$; $0.001<w/(a+x+y+j)\leq 0.02$; M is selected from at least one element of Zr, Nb, Ti, Y, Sc, Cr, Co, W, Mg, La, Ta, and B; and M' is oxide, phosphide, sulfide, or fluoride containing at least one element of Zr, Nb, Ti, Y, Sc, Cr, Co, W, Mg, La, Ta, and B.

4.  The lithium-containing oxide cathode material according to any one of claims 1 to 3, wherein:

    the lithium-containing oxide cathode material has a pellet density of $\geq 2.8$ g/cm$^3$, preferably $\geq 3$ g/cm$^3$, and more preferably $\geq 3.2$ g/cm$^3$; and/or
    the lithium-containing oxide cathode material has a tap density of $\geq 1.7$ g/cm$^3$, preferably $\geq 2$ g/cm$^3$, and more preferably $\geq 2.4$ g/cm$^3$; and/or

a content of surface soluble alkali of the lithium-containing oxide cathode material satisfies the following conditions: $Li_2CO_3 \leq 1$ wt%, $LiOH \leq 0.5$ wt%; preferably, $Li_2CO_3 \leq 0.5$ wt%, $LiOH \leq 0.4$ wt%; further preferably, $Li_2CO_3 \leq 0.3$ wt%, $LiOH \leq 0.3$ wt%; and more preferably, $Li_2CO_3 \leq 0.2$ wt%, $LiOH < 0.2$ wt%; and/or

a full width at half maximum $FWHM_{(003)}$ of (003) crystal plane and a full width at half maximum $FWHM_{(104)}$ of (104) crystal plane of the lithium-containing oxide cathode material obtained by X-Ray Diffraction, XRD, satisfy the following conditions: $0.10 \leq FWHM_{(003)} \leq 0.25$, and preferably, $0.13 \leq FWHM_{(003)} \leq 0.22$; and $0.20 \leq FWHM_{(104)} \leq 0.50$, and preferably, $0.22 \leq FWHM_{(104)} \leq 0.42$; and/or

a peak area $S_{(003)}$ of the (003) crystal plane and a peak area $S_{(104)}$ of the (104) crystal plane of the lithium-containing oxide cathode material obtained by XRD satisfy the following conditions: $1.1 \leq S_{(003)}/S_{(104)} \leq 1.8$, and preferably, $1.2 \leq S_{(003)}/S_{(104)} \leq 1.6$.

5. A precursor of a lithium-containing oxide cathode material, wherein:
   the precursor has a compressive index $\Delta\lambda'(P_{50})$ satisfying $\Delta\lambda'(P_{50}) \geq 35\% + (v/u) \times 8\%$, where $v/u$ is a molar ratio of Mn/Ni in the precursor.

6. The precursor according to claim 5, wherein the precursor has a compressive index $\Delta\lambda'(P_{100})$ satisfying $\Delta\lambda'(P_{100}) \geq 25\% + (v/u) \times 8\%$.

7. A preparation method of a lithium-containing oxide cathode material, the preparation method comprising:

   S1: uniformly mixing a precursor having a chemical formula represented by Formula (1), a lithium source, and an optional additive containing element $M_2$, and performing a first sintering in an atmosphere furnace, to obtain a primary sintered material having a chemical formula represented by Formula (2); and
   S2: uniformly mixing the primary sintered material with an additive containing element M', and performing a second sintering on the mixed material in an atmosphere furnace, to obtain a lithium-containing metal oxide having a chemical formula represented by Formula (3),

   $$Ni_uMn_vM_{1\gamma}(OH)_2, \qquad \text{Formula (1)},$$

   where: $u+v+\gamma=1$, $0.2<u<1$, $0<v\leq0.75$, $0\leq\gamma\leq0.35$, and $M_1$ is selected from at least one element of Al, Zr, Nb, Ti, Y, Sc, Cr, Co, W, Mg, Na, La, Os, Pr, Re, Ru, Sr, Sm, Ta, and B;

   $$Li[Li_aNi_xMn_yM_j]O_2, \qquad \text{Formula (2)};$$

   $$Li[Li_aNi_xMn_yM_j]O_2@M', \qquad \text{Formula (3)};$$

   wherein in Formula (2) and Formula (3), $a+x+y+j=1$, $0\leq a\leq0.3$, $0.2<x<1$, $0<y\leq0.75$, $0<j\leq0.35$; and M comprises element $M_1$ in the precursor and element $M_2$ introduced during the first sintering, $M_1$ and $M_2$ being the same or different and being each selected from at least one element of Al, Zr, Nb, Ti, Y, Sc, Cr, Co, W, Mg, La, Os, Pr, Re, Ru, Sr, Sm, Ta, and B; and
   wherein in Formula (3), M' is oxide, phosphide, sulfide, fluoride, or chloride containing at least one element of Al, Zr, Nb, Ti, Y, Sc, Cr, Co, W, Mg, La, Os, Pr, Re, Ru, Sr, Sm, Ta, and B, and a molar content of cations in M' is $w$, $w$ satisfying $0<w/(a+x+y+j)\leq0.1$.

8. The preparation method according to claim 7, wherein:

   when a molar ratio of Ni/Mn is greater than 1, satisfying $x/y>1$, a relationship between a sintering temperature $T_1$ of the first sintering and a content of Ni satisfies $550 \times (2-x)°C \leq T_1 \leq 400 \times (3-x)°C$, and a sintering duration of the first sintering ranges from 6 hours to 20 hours, and preferably, from 8 hours to 15 hours; and/or
   when the molar ratio of Ni/Mn is smaller than or equal to 1, satisfying $y/x\geq1$, a relationship between a sintering temperature $T_2$ of the first sintering and a content of Mn satisfies $500 \times (1+y)°C \leq T_2 \leq 650 \times (1+y)°C$, and a sintering duration of the first sintering ranges from 6 hours to 20 hours, and preferably, from 8 hours to 15 hours; and/or
   when $x<0.5$, the first sintering and the second sintering are performed in an air atmosphere; when $0.5\leq x<0.6$, the first sintering and the second sintering are performed in an air atmosphere or a mixture atmosphere of air and oxygen; and when $x\geq0.6$, the first sintering and the second sintering are performed in an oxygen atmosphere or a mixture atmosphere of oxygen and air.

9. A lithium-containing oxide cathode material, prepared by the preparation method of the lithium-containing oxide cathode material according to claim 7 or 8.

10. A positive electrode plate, comprising at least 90 wt% of a lithium-containing oxide cathode material based on a total weight of the positive electrode plate, wherein the lithium-containing oxide cathode material is the lithium-containing oxide cathode material according to any one of claims 1 to 4 and claim 9.

11. The positive electrode plate according to claim 10, wherein the positive electrode plate has an electrode density of $\geq 2.8$ g/cm$^3$, preferably $\geq 3.2$ g/cm$^3$, and more preferably $\geq 3.5$ g/cm$^3$.

12. Use of the lithium-containing oxide cathode material according to any one of claims 1 to 4 and claim 9, the precursor of the lithium-containing oxide cathode material according to claim 5 or 6, or the positive electrode plate according to claim 10 or 11 in a lithium-ion battery.

FIG. 1

FIG. 2

FIG. 3

FIG. 4

FIG. 5

FIG. 6

FIG. 7

FIG. 8

FIG. 9

FIG. 10

FIG. 11

FIG. 12

FIG. 13

FIG. 14

## INTERNATIONAL SEARCH REPORT

| International application No. |
| --- |
| **PCT/CN2022/120889** |

**A. CLASSIFICATION OF SUBJECT MATTER**

H01M4/525(2010.01)i

According to International Patent Classification (IPC) or to both national classification and IPC

**B. FIELDS SEARCHED**

Minimum documentation searched (classification system followed by classification symbols)

IPC:H01M

Documentation searched other than minimum documentation to the extent that such documents are included in the fields searched

Electronic data base consulted during the international search (name of data base and, where practicable, search terms used)

VEN, CNABS, CNTXT, USTXT, EPTXT, WOTXT, CNKI, IEEE: 电池, 正极, 阴极, 镍锰, 镍钴锰, 掺杂, 改性, 包覆, 表面, 涂层, 抗压, 辊压, 压缩, 压碎, 耐压, 指数, 强度, 硬度, 能力, 颗粒, 粒径, 前驱体, 沉淀, 固含量, battery, cathode, positive, nickel, manganese, cobalt, dop+, modificat+, coat+, compress+, crush, rolling, granule, index, strength, hardness, capacity, particles, size, precursors, precipitation, solid? 2d content

**C. DOCUMENTS CONSIDERED TO BE RELEVANT**

| Category* | Citation of document, with indication, where appropriate, of the relevant passages | Relevant to claim No. |
| --- | --- | --- |
| X | CN 111384371 A (NINGDE CONTEMPORARY AMPEREX TECHNOLOGY CO., LTD.) 07 July 2020 (2020-07-07)<br>description, paragraphs 27-111 | 1-4, 7-12 |
| X | CN 103794778 A (HUNAN SOUNDDON NEW ENERGY CO., LTD.) 14 May 2014 (2014-05-14)<br>description, paragraphs 19-21 and 33-38 | 5-6, 12 |
| X | CN 111129448 A (ZHEJIANG MEIDU HITRANS LITHIUM BATTERY TECHNOLOGY CO., LTD.) 08 May 2020 (2020-05-08)<br>description, paragraphs 11-47 | 1-4, 7-12 |
| X | CN 113363497 A (HUIZHOU EVE ENERGY CO., LTD.) 07 September 2021 (2021-09-07)<br>description, paragraphs 8-61 | 1-4, 7-12 |
| A | CN 106463724 A (UMICORE KOREA LTD. et al.) 22 February 2017 (2017-02-22)<br>entire document | 1-12 |

☑ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **12 May 2023** | **18 May 2023** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2022/120889** |

| C. | DOCUMENTS CONSIDERED TO BE RELEVANT | |
| --- | --- | --- |
| Category* | Citation of document, with indication, where appropriate, of the relevant passages | Relevant to claim No. |
| A | CN 108807974 A (NINGDE CONTEMPORARY AMPEREX TECHNOLOGY CO., LTD.) 13 November 2018 (2018-11-13) entire document | 1-12 |
| A | CN 113646930 A (LG ENERGY SOLUTION LTD.) 12 November 2021 (2021-11-12) entire document | 1-12 |

Form PCT/ISA/210 (second sheet) (July 2022)

INTERNATIONAL SEARCH REPORT
Information on patent family members

International application No.

**PCT/CN2022/120889**

| Patent document cited in search report | | | Publication date (day/month/year) | Patent family member(s) | | | Publication date (day/month/year) |
|---|---|---|---|---|---|---|---|
| CN | 111384371 | A | 07 July 2020 | WO | 2020134774 | A1 | 02 July 2020 |
| | | | | EP | 3790083 | A1 | 10 March 2021 |
| | | | | CN | 111384371 | B | 07 May 2021 |
| | | | | EP | 3790083 | A4 | 06 October 2021 |
| | | | | US | 2022045324 | A1 | 10 February 2022 |
| CN | 103794778 | A | 14 May 2014 | None | | | |
| CN | 111129448 | A | 08 May 2020 | None | | | |
| CN | 113363497 | A | 07 September 2021 | None | | | |
| CN | 106463724 | A | 22 February 2017 | US | 2022255075 | A1 | 11 August 2022 |
| | | | | EP | 3155680 | A1 | 19 April 2017 |
| | | | | EP | 3155680 | A4 | 07 February 2018 |
| | | | | EP | 3155680 | B1 | 07 August 2019 |
| | | | | PL | 3155680 | T3 | 31 January 2020 |
| | | | | US | 2021005891 | A1 | 07 January 2021 |
| | | | | US | 11335907 | B2 | 17 May 2022 |
| | | | | JP | 2017525089 | A | 31 August 2017 |
| | | | | JP | 6469138 | B2 | 13 February 2019 |
| | | | | TW | 201607120 | A | 16 February 2016 |
| | | | | TWI | 559604 | B | 21 November 2016 |
| | | | | HUE | 046586 | T2 | 30 March 2020 |
| | | | | WO | 2015189740 | A1 | 17 December 2015 |
| | | | | KR | 20170018405 | A | 17 February 2017 |
| | | | | KR | 101821530 | B1 | 23 January 2018 |
| | | | | KR | 101821530 | B9 | 08 February 2023 |
| | | | | US | 2017125808 | A1 | 04 May 2017 |
| | | | | US | 10833328 | B2 | 10 November 2020 |
| | | | | CN | 106463724 | B | 22 October 2019 |
| CN | 108807974 | A | 13 November 2018 | US | 2020006750 | A1 | 02 January 2020 |
| | | | | US | 11552286 | B2 | 10 January 2023 |
| | | | | EP | 3588629 | A1 | 01 January 2020 |
| | | | | CN | 108807974 | B | 09 July 2021 |
| CN | 113646930 | A | 12 November 2021 | JP | 2022510653 | A | 27 January 2022 |
| | | | | JP | 7214299 | B2 | 30 January 2023 |
| | | | | WO | 2020116858 | A1 | 11 June 2020 |
| | | | | US | 2022020983 | A1 | 20 January 2022 |
| | | | | EP | 3869595 | A1 | 25 August 2021 |
| | | | | KR | 20200067009 | A | 11 June 2020 |

Form PCT/ISA/210 (patent family annex) (July 2022)